# FASCICULE DE BREVET EUROPEEN

(11) **EP 1 659 601 B1**
(45) Date de publication et mention de la délivrance du brevet: **16.04.2008**
(21) Numéro de dépôt: 05110822.3
(22) Date de dépôt: 16.11.2005
(51) Int. Cl.: H01H 9/28

(54) **Dispositif de commande mécanique pour un appareillage électrique à trois positions de commutation ayant un levier de sélection coopérant avec une came**
Mechanische Steuervorrichtung für ein elektrisches Gerät mit drei Schaltstellungen mit einem Wahlhebel der mit eine Nocke wirkt
Mechanical actuator for an electric device having three switching positions having a selection lever cooperating with a cam

(30) Priorité: 18.11.2004 FR 0452679
(43) Date de publication de la demande: 24.05.2006
(73) Titulaire: AREVA T&D AG, 5036 Oberentfelden (CH)
(72) Inventeur: Gacond, Marius, 5000, AARAU (CH); Von Allmen, Peter, 5033 BUCHS (CH)
(74) Mandataire: Poulin, Gérard

(56) Documents cités:
- EP-A- 1 271 588
- EP-A- 1 271 589
- EP-A- 1 465 222
- US-A- 1 803 163

## Description

### DOMAINE TECHNIQUE

La présente invention se rapporte au domaine technique des dispositifs de commande mécanique pour des appareils à trois positions de commutation, comportant une position de fermeture, une position d'ouverture, et une position de mise à la terre.

Plus particulièrement, l'invention se rapporte à un dispositif de commande mécanique pour un appareillage blindé à isolation gazeuse, comme par exemple un disjoncteur ou un sectionneur à isolation gazeuse à trois positions de commutation. Le dispositif de commande mécanique permet d'actionner cet appareillage électriquement ou manuellement.

### ÉTAT DE LA TECHNIQUE ANTÉRIEURE

Les documents EP 1 271 588-A1 et EP 1 271 589-A1 divulguent des dispositifs de commande pour un sectionneur à trois positions de commutation, comportant une position de fermeture, une position d'ouverture et une position de mise à la terre, par l'intermédiaire de laquelle le sectionneur peut être électriquement ou manuellement actionné. Les dispositifs de commande comportent un arbre rotatif principal destiné à être accouplé au contact mobile du sectionneur. Cet arbre principal est mis en rotation lors des commutations, soit par un moteur électrique, soit manuellement par l'intermédiaire d'une manivelle, qui est alors accouplée avec un organe de commutation manuelle lié en mouvement avec l'arbre principal.

Plus précisément, ces documents décrivent des dispositifs de commande pour un sectionneur à trois positions de commutation, comportant deux organes de commutation manuelle, l'un qui commute le sectionneur de sa position de fermeture vers sa position d'ouverture ou inversement, et l'autre qui commute le sectionneur de sa position d'ouverture vers sa position de mise à la terre ou inversement.

Le EP 1 271 588-A1 enseigne une commande de sectionneur dans laquelle est intégré un mécanisme interdisant certaines séquences de commutation manuelle du sectionneur pour satisfaire des exigences particulières d'un utilisateur.

Le EP 1 271 589-A1 enseigne une commande de sectionneur comportant en outre un moyen pour bloquer le mouvement rotatif de la manivelle, lorsque le sectionneur atteint sa position d'ouverture à partir de sa position de fermeture ou de sa position de mise à la terre.

Les dispositifs de commande de sectionneur décrite dans ces deux documents présentent des inconvénients.

Tout d'abord, ces dispositifs de commande de sectionneur comportent un mécanisme d'interverrouillage, dont l'agencement et la configuration permettent d'interdire certaines séquences de commutation manuelle du sectionneur. Par exemple, il n'est pas possible d'effectuer une opération de mise à la terre qui succède à une opération de fermeture.

D'autre part, ces dispositifs de commande de sectionneur comportent deux ouvertures séparées dans lesquelles peut être insérée la manivelle destinée à effectuer une commutation manuelle entre la position de fermeture et la position d'ouverture, ou entre la position d'ouverture et la position de mise à la terre. Chaque ouverture est dotée d'une pièce de couplage destinée à connecter mécaniquement le boulon d'arrêt à la commande et d'un organe de fermeture destiné à empêcher l'insertion de la manivelle dans l'ouverture lorsque le commutateur est dans une position excluant l'opération correspondante. Chacune des deux ouvertures est également dotée d'au moins un verrou. La duplication de ces pièces est compliquée et onéreuse.

De plus, le mécanisme d'interverrouillage de ces dispositifs de commande de sectionneur est commandé par un arbre secondaire, qui est entraîné par l'arbre principal par l'intermédiaire d'un engrenage d'angle. Cependant, il existe un risque que le mécanisme d'interverrouillage se trouve dans une position qui ne corresponde pas à la position de l'arbre principal, ce qui peut provoquer des opérations manuelles erronées.

Par conséquent, il existe un besoin pour un dispositif de commande mécanique pour un appareillage à trois positions de commutation, qui ne présente pas les inconvénients ci-dessus mentionnés des dispositifs de commande de la technique antérieure.

### EXPOSÉ DE L'INVENTION

L'invention a pour but de proposer un dispositif de commande pour un appareillage électrique à trois positions de commutation, comme par exemple un sectionneur, qui ne présente pas les inconvénients de l'art antérieur énoncés ci-dessus.

Selon l'invention, le dispositif de commande pour un appareillage électrique à trois positions de commutation, du type comportant une position de fermeture, une position d'ouverture et une position de mise à la terre, et comprenant un arbre principal et un arbre d'entraînement, est destiné à être accouplé à un contact mobile dudit appareillage électrique. Il comporte :
- un levier sélecteur de mode destiné à sélectionner un mode de fonctionnement parmi les modes « mode de commutation motorisée », « premier mode de commutation manuelle entre la position d'ouverture et la position de fermeture de l'appareillage électrique » et « deuxième mode de commutation manuelle entre la position d'ouverture et la position de mise à la terre de l'appareillage électrique », ledit levier sélecteur de mode comportant une ouverture, et
- un disque à came, fixé sur l'arbre d'entraînement, et ayant une came apte à se déplacer à l'intérieur de ladite ouverture,
de telle manière que le déplacement du disque à came est libre lorsque le dispositif de commande se trouve dans le mode de commutation motorisée, limité à une première plage angulaire de rotation de l'arbre d'entraînement lorsque le dispositif de commande se trouve dans le premier mode de commutation manuelle, et limité à une deuxième plage angulaire de rotation de l'arbre d'entraînement lorsque le dispositif de commande se trouve dans le deuxième mode de commutation manuelle.

Le levier sélecteur de mode se déplace entre :
- une position neutre, par laquelle est sélectionné le mode de commutation motorisée, qui peut être atteinte pour n'importe quelle position angulaire de l'arbre principal,
- une première position extrême, par laquelle est sélectionné le premier mode de commutation manuelle entre la position d'ouverture et la position de fermeture de l'appareillage électrique, et qui peut être atteinte lorsque la position angulaire de l'arbre principal se trouve dans une première plage angulaire,
- une deuxième position extrême, par laquelle est sélectionné le deuxième mode de commutation manuelle entre la position d'ouverture et la position de mise à la terre de l'appareillage électrique, et qui peut être atteinte lorsque la position angulaire de l'arbre principal se trouve dans une deuxième plage angulaire.

La came présente un contour sensiblement circulaire ou elliptique ou ovale ayant un centre de courbure confondu avec le centre de courbure du disque à came. Elle est reliée au disque à came par deux zones de liaison qui définissent deux becs circonférentiels.

Le contour de l'ouverture du levier sélecteur de mode comporte deux portions curvilignes reliées l'une à l'autre par deux portions intermédiaires, les portions curvilignes et les portions intermédiaires étant séparées par des zones de liaison qui définissent deux encoches de liaison.

Le dispositif de commande comporte un disque de transmission et de verrouillage, fixé sur l'arbre principal, ledit disque de transmission et de verrouillage comportant une première partie de disque qui est fonctionnellement reliée à des équipements d'indication de position, et une deuxième partie de disque qui coopère avec le levier sélecteur de mode pour empêcher celui-ci de se trouver dans une position incorrecte lors de son déplacement, en fonction de la position angulaire de l'arbre principal.

La première partie de disque est munie de dents sur sa périphérie, lesdites dents étant destinées à se mettre en prise avec des dents d'une barre de commande qui est fonctionnellement reliée à des commutateurs auxiliaires et à un indicateur de position.

La deuxième partie de disque comporte une fente ayant sensiblement la forme de deux portions d'anneau décalées radialement l'une de l'autre et en communication l'une avec l'autre.

Le dispositif de liaison comporte une broche fixée au levier sélecteur de mode, qui s'engrène dans ladite fente pour empêcher le levier sélecteur de mode de se trouver dans une position incorrecte lors de son déplacement, en fonction de la position angulaire de l'arbre principal.

La broche s'étend de manière sensiblement perpendiculaire à partir d'une face du levier sélecteur de mode qui se trouve en regard du disque de transmission et de verrouillage.

Le disque de transmission et de verrouillage est entraîné par un disque entraîné porté par l'arbre principal, ledit disque entraîné étant lui-même entraîné par une roue à galets fixée sur l'arbre d'entraînement, dans lesquels le disque entraîné présente deux échancrures et deux zones de butée de telle sorte que ledit disque entraîné et ladite roue à galets constituent un mécanisme de Genève, ou mécanisme à Croix de Malte.

Selon un premier mode de réalisation du dispositif de commande, le disque entraîné est fixé rigidement sur l'arbre principal et entraîne l'arbre principal et le disque de transmission et de verrouillage fixé sur ledit arbre principal.

Selon un deuxième mode de réalisation du dispositif de commande, le disque entraîné possède un degré de liberté en rotation autour dudit arbre principal et un degré de liberté en translation le long dudit arbre principal, le disque entraîné entraîne le disque de transmission et de verrouillage, le disque entraîné étant appliqué élastiquement contre le disque de transmission et de verrouillage par l'intermédiaire d'un moyen de rappel. Chacun desdits disque entraîné et disque de transmission et de verrouillage comporte des trous respectifs qui coïncident de manière à former des cavités dans lesquelles sont disposées des billes. La combinaison du disque de transmission et de verrouillage, du disque entraîné, du moyen de rappel, des billes et des trous constitue un mécanisme limiteur de couple.

De manière commune au premier mode de réalisation et au deuxième mode de réalisation, la rotation du premier disque à came est interrompue :
- soit lorsque le levier sélecteur se trouve dans la première position extrême et l'appareillage électrique se trouve dans la position d'ouverture, car un premier des becs de la came du disque à came vient en butée contre une première encoche de liaison de l'ouverture du levier sélecteur de mode,
- soit lorsque le levier sélecteur de mode se trouve dans la première position extrême et l'appareillage électrique se trouve dans la position de fermeture, car un premier des galets de la roue vient en butée contre l'une des zones de butée du disque entraîné lors du fonctionnement du mécanisme de Genève,
- soit lorsque le levier sélecteur de mode se trouve dans la deuxième position extrême et l'appareillage électrique se trouve dans la position d'ouverture, car un deuxième des becs de la came du disque à came vient en butée contre une deuxième encoche de liaison de l'ouverture du levier sélecteur de mode,
- soit lorsque le levier sélecteur de mode se trouve dans la deuxième position extrême l'appareillage électrique se trouve dans la position de mise à la terre, car un deuxième des galets de la roue vient en butée contre l'autre des zones de butée du disque entraîné lors du fonctionnement du mécanisme de Genève.

De manière commune au premier mode de réalisation et au deuxième mode de réalisation, le dispositif de commande comporte un levier d'actionnement qui est fonctionnellement relié au levier sélecteur de mode, de telle sorte qu'il est possible de sélectionner le mode de commutation motorisée ou l'un des deux modes de commutation manuelle en positionnant le levier d'actionnement dans l'une des trois positions suivantes :
- une position neutre correspondant à la position neutre du levier sélecteur de mode, par laquelle est sélectionné le mode de commutation motorisée,
- une première position extrême correspondant à la première position extrême du levier sélecteur de mode, et par laquelle est sélectionné le premier mode de commutation manuelle entre la position d'ouverture et la position de fermeture de l'appareillage électrique,
- une deuxième position extrême correspondant à la première position extrême du levier sélecteur de mode, et par laquelle est sélectionné le deuxième mode de commutation manuelle entre la position d'ouverture et la position de mise à la terre de l'appareillage électrique.

Un déplacement du levier d'actionnement produit un déplacement d'une biellette qui est reliée au levier sélecteur de mode et qui commande le déplacement de celui-ci.

Le levier d'actionnement est apte à pivoter autour d'un arbre de pivotement, dans un plan perpendiculaire à un arbre auxiliaire.

Le dispositif de commande est fonctionnellement relié à un mécanisme de blocage, qui comporte un levier de blocage rigidement fixé au levier d'actionnement et un boulon d'arrêt. Le dispositif de commande et le mécanisme de blocage sont disposés dans un boîtier, de telle sorte que le levier d'actionnement et le boulon d'arrêt sont disposés du côté extérieur d'une paroi dudit boîtier, tandis que le levier de blocage est disposé du côté intérieur de ladite paroi dudit boîtier.

En outre, le boîtier est doté d'un trou de passage, et le boulon d'arrêt est doté d'une tige de boulon. Par suite :
- lorsque le mode de commutation motorisée est sélectionné, le levier de blocage est positionné en regard du trou de passage, afin d'empêcher la tige de boulon ou un organe de manoeuvre de se coupler à l'arbre auxiliaire, de telle sorte que la rotation dudit l'arbre auxiliaire est autorisée, et
- lorsque l'un des modes de commutation manuelle est sélectionné, le levier de blocage est positionné de manière à dégager le trou de passage, afin de permettre à la tige de boulon ou à un organe de manoeuvre de se coupler à l'arbre auxiliaire.

Le boulon d'arrêt et le levier d'actionnement sont immobilisés ensemble dans une position correspondant au mode de commutation motorisée ou dans une position correspondant à l'un ou à l'autre des deux modes de commutation manuelle, au moyen d'un cadenas ayant des bras qui traversent au moins un trou de blocage du levier d'actionnement et au moins un trou du boulon d'arrêt. De cette manière, la rotation de l'arbre auxiliaire est bloquée dans l'un des deux modes de commutation manuelle.

En outre, le dispositif de commande comporte au moins un levier de commutation associé au mécanisme de blocage, ledit au moins un levier de commutation étant relié à des commutateurs supplémentaires eux-mêmes reliés au moteur, afin d'informer ledit moteur du mode de commutation sélectionné.

### BRÈVE DESCRIPTION DES DESSINS

L'invention sera mieux comprise à la lecture de la description détaillée qui va suivre de modes de réalisation de l'invention, donnés à titre illustratif et nullement limitatif, en référence aux dessins annexés, dans lesquels :
- la figure 1 est une vue en perspective supérieure montrant un premier mode de réalisation du dispositif de commande, ainsi que le mécanisme de blocage, disposés dans un boîtier dont la paroi supérieure est découpée, et montrant les pièces de liaison du dispositif de commande avec le moteur ;
- la figure 2 est une vue analogue à la figure 1, le boîtier étant omis ;
- la figure 2A est un schéma montrant, en vue de dessus, le déplacement en rotation du premier disque à came du dispositif de commande ;
- la figure 3 est une vue en perspective inférieure du dispositif de commande de la figure 1, le boîtier étant omis ;
- la figure 4 est une vue analogue à la figure 3, à plus grande échelle, les pièces de liaison étant omises, montrant le dispositif de commande et le mécanisme de blocage ;
- la figure 5 est une vue en coupe, en élévation, d'un deuxième mode de réalisation du dispositif de commande, dans lequel il est doté d'un mécanisme limiteur de couple ;
- la figure 6 est une vue analogue à la figure 3, à plus grande échelle, les pièces de liaison étant omises, montrant le mécanisme de blocage dans une autre position de fonctionnement ;
- la figure 7 est une vue analogue à la figure 6, l'une des pièces étant séparée du reste du mécanisme, pour une meilleure compréhension ;
- la figure 8 est une vue de dessus du disque de transmission et de verrouillage du dispositif de commande selon le premier ou le deuxième mode de réalisation ;
- la figure 9 est une vue de dessus du levier sélecteur de mode du dispositif de commande selon le premier ou le deuxième mode de réalisation ;
- la figure 10 est une vue de dessus du disque à came du dispositif de commande selon le premier ou le deuxième mode de réalisation ;
- la figure 11 est une vue de dessus du disque échancré du dispositif de commande selon le premier ou le deuxième mode de réalisation ;
- la figure 12 est une vue de dessus du disque entraîné du dispositif de commande selon le premier ou le deuxième mode de réalisation.

### EXPOSÉ DÉTAILLÉ DE MODES DE RÉALISATION PARTICULIERS

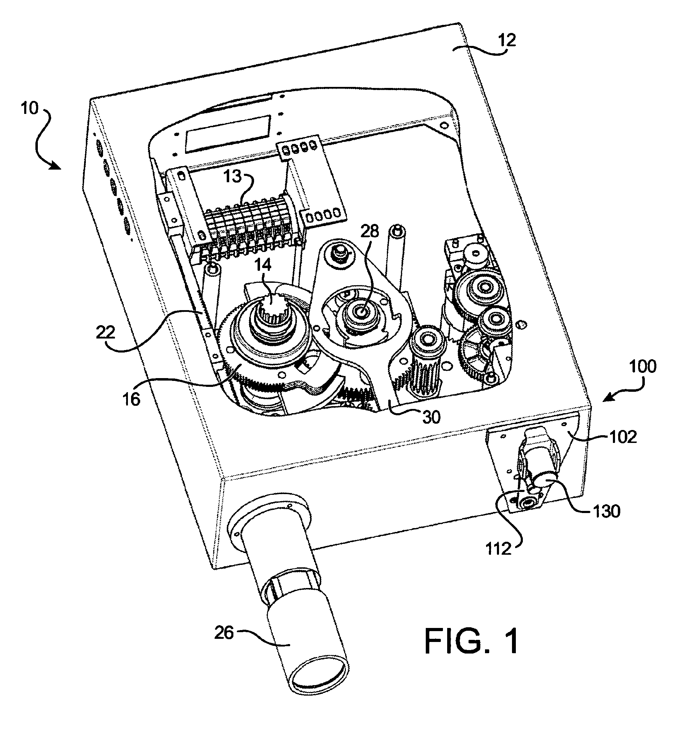

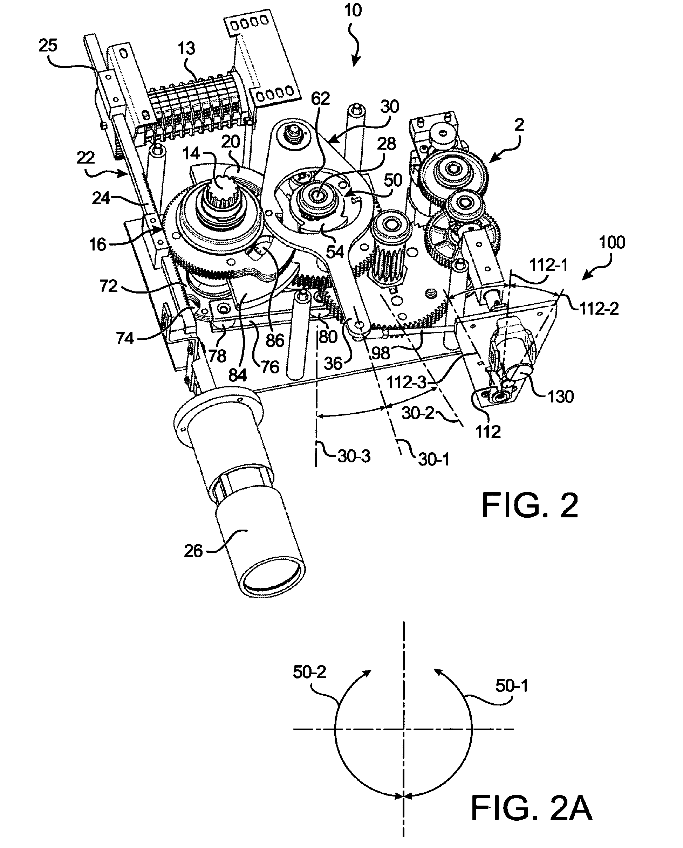

Le premier mode de réalisation du dispositif de commande selon l'invention va être tout d'abord décrit. En se référant tout d'abord aux figures 1 et 2, il est représenté un dispositif de commande 10 pour un appareillage électrique ayant un contact mobile pouvant être commuté dans trois positions correspondant respectivement à l'ouverture, à la fermeture, et à la mise à la terre de l'appareillage électrique.

Le dispositif de commande 10 est disposé à l'intérieur d'un boîtier 12. Il comporte un arbre rotatif principal 14 destiné à être accouplé au contact mobile (non représenté) de l'appareillage électrique.

En fonctionnement normal ou mode de commutation motorisée, l'arbre principal 14 est entraîné par un moteur 2 (représenté sur la figure 2). Ce moteur 2 est commandé par des signaux provenant de commutateurs auxiliaires 13 et d'un équipement de commande maître (non représenté). Le moteur 2 cesse de fonctionner dès lors qu'a été atteinte l'une des trois positions : ouverture, fermeture, mise à la terre, de l'appareillage électrique.

Plus précisément, le dispositif de commande 10 comporte un arbre d'entraînement 28 et un arbre intermédiaire 68, tous deux parallèles à l'arbre principal 14. L'arbre principal 14 porte un disque entraîné 84 qui est entraîné par une roue 60 portée par l'arbre d'entraînement 28. Cette roue 60 a une périphérie dentée, et elle est elle-même entraînée par un ensemble d'engrenages 4 porté par l'arbre intermédiaire 68, cet ensemble d'engrenages 4 étant mis en rotation par le moteur 2.

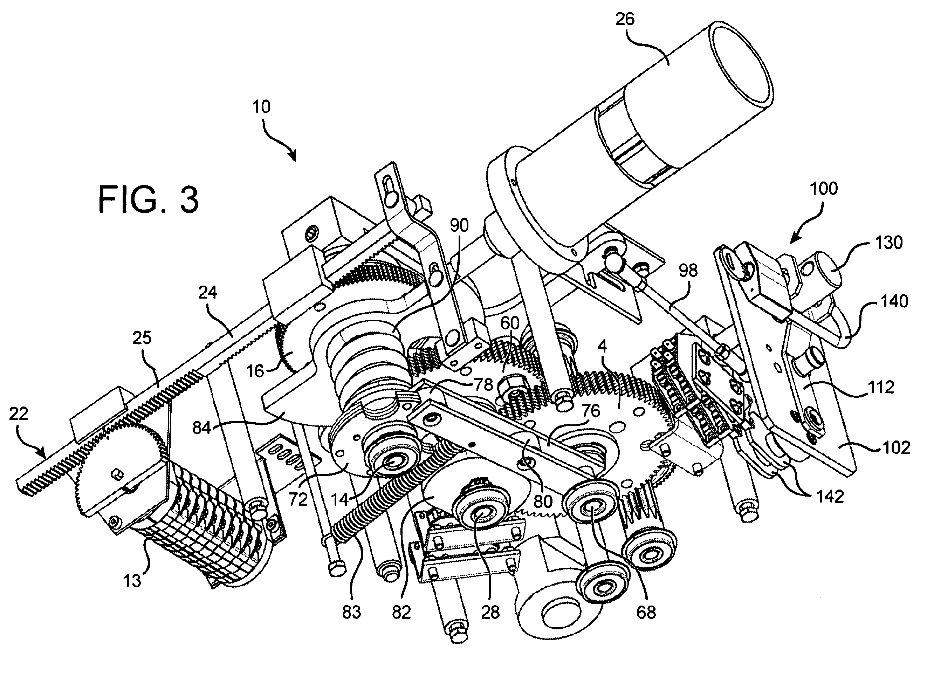

La roue 60, visible sur les figures 2 et 3, est fixée rigidement sur l'arbre d'entraînement 28. Elle comporte deux galets de roue 62, 63, qui sont fixés rigidement sur une face de celle-ci en étant diamétralement opposés l'un à l'autre.

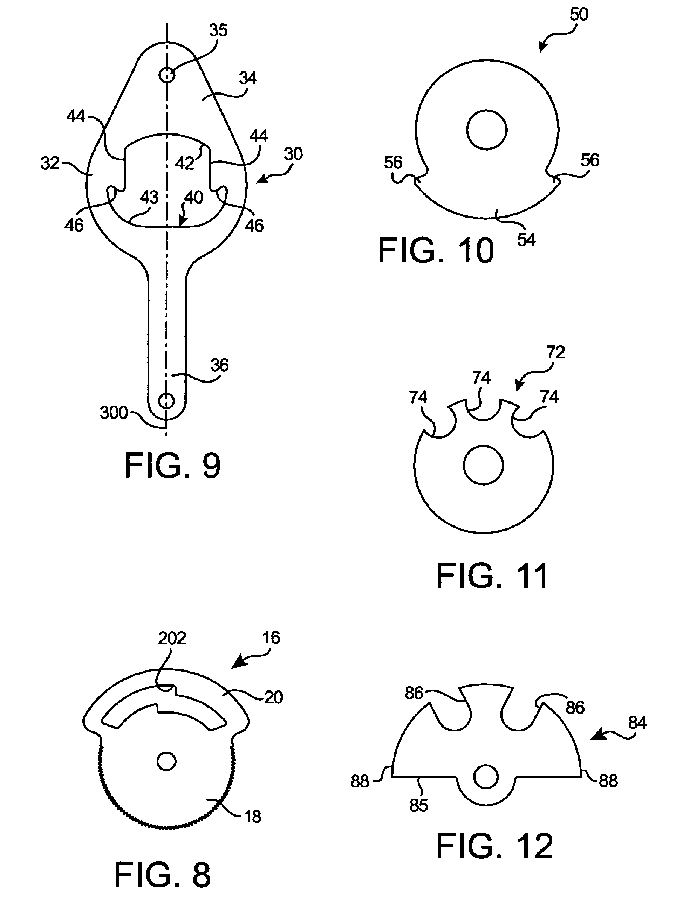

Le disque entraîné 84, représenté en vue de dessus à la figure 12, est fixé rigidement sur l'arbre principal 14. Il se présente sensiblement sous la forme d'un demi disque ayant un bord diamétral 85. Il est doté de deux échancrures 86 qui sont dimensionnées et positionnées de telle sorte qu'elles puissent recevoir chacune l'un des deux galets de roue 62, 63. Il est également doté de deux zones de butée 88 qui sont positionnées respectivement entre l'une des échancrures 86 et le bord diamétral 85. Le contour de ces zones de butée 88 a sensiblement une forme de portion de disque.

La roue 60 et le disque entraîné 84 fonctionnent ensemble à la manière d'un mécanisme connu sous la dénomination « mécanisme de Genève » ou « mécanisme à Croix de Malte ». C'est-à-dire qu'au cours de la rotation de la roue 60, l'un ou l'autre des galets de roue 62, 63 vient en prise avec l'une des échancrures 86 du disque entraîné 84, et l'entraîne en rotation sur un trajet correspondant à une portion de cercle, puis il se met hors de prise de cette échancrure 86.

Dans certaines circonstances, par exemple en cas de panne ou d'urgence, il est souhaité que l'arbre principal 14 ne soit pas mis en rotation par la commande du moteur 2, mais qu'il soit mis en rotation par une commande manuelle.

A cet effet, le dispositif de commande 10 peut être mis en oeuvre au moyen d'un organe de manoeuvre qui peut être couplé à un arbre auxiliaire 106. Le dispositif de commande 100 comporte un levier d'actionnement 112 positionné dans une position correspondant à un mode de commutation manuelle. Ce levier d'actionnement 112 est fonctionnellement relié à un levier sélecteur de mode 30 coopérant avec un premier disque à came 50. Le premier disque à came 50 est porté par l'arbre d'entraînement 28, qui entraîne l'arbre principal 14 au moyen du mécanisme de Genève, de la même manière que pour le mode de commutation motorisée décrit ci-dessus. Le mouvement de rotation de l'arbre principal 14 est limité au moyen du premier disque à came 50 coopérant avec le levier sélecteur de mode 30 et au moyen des zones de butée 88 du disque entraîné 84 coopérant avec les galets 62, 63 de la roue 60. Toutes ces pièces vont être décrites en référence aux figures 2 à 4 et 8 à 11.

Le levier d'actionnement 112, représenté sur les figures 2 à 4, est actionné manuellement par un opérateur. Il comporte un corps ayant sensiblement une forme de plaquette de direction allongée. Il est disposé à l'extérieur du boîtier 12 parallèlement à une face de celui-ci. L'une de ses extrémités est fixée sur un arbre de pivotement 116 de telle façon que le levier d'actionnement 112 peut pivoter autour de l'arbre de pivotement 116, dans un plan perpendiculaire audit arbre de pivotement 116.

Comme illustré à la figure 2, le déplacement angulaire du levier d'actionnement 112 est défini à l'intérieur d'un secteur angulaire dont les bornes définissent deux positions extrêmes 112-2 et 112-3 et dont la médiane définit une position neutre 112-1.

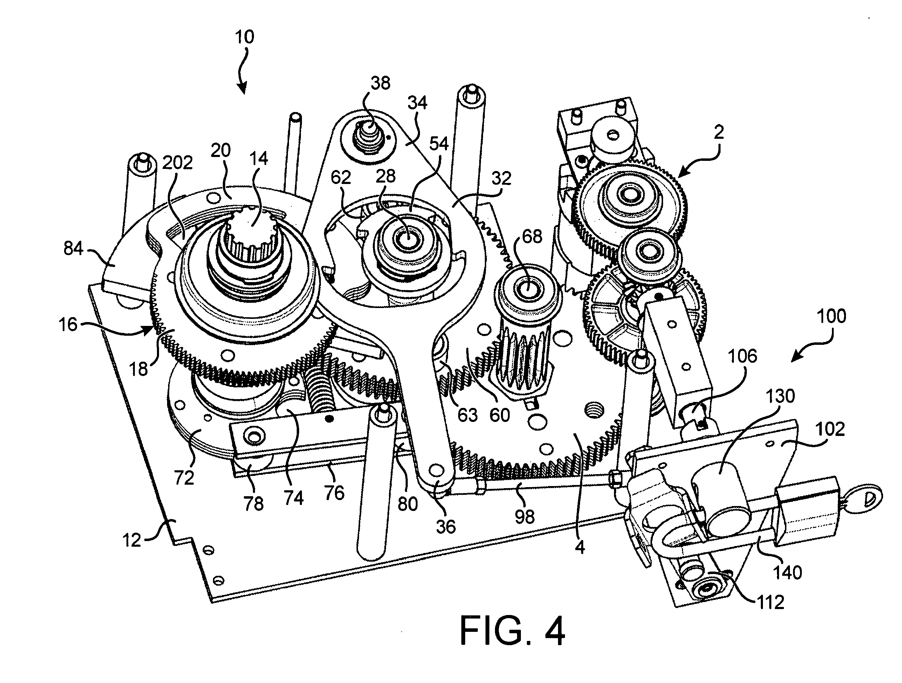

Le levier sélecteur de mode 30 est représenté sur les figures 2 et 4. Il se présente sensiblement sous la forme d'une plaque ayant un corps central 32 sensiblement en forme de disque, une première extension 34, prolongeant le corps central 32 en s'effilant sensiblement en forme de triangle, et une deuxième extension 36 prolongeant le corps central 32 et présentant sensiblement une forme de queue. Les deux extensions 34, 36 se trouvent diamétralement opposées par rapport au corps central 32.

L'extrémité de la première extension 34 comporte un trou 35 qui est traversé par une tige de rotation 38 elle-même rigidement fixée au boîtier 12, de sorte que le levier sélecteur de mode 30 est libre de tourner autour de cette tige de rotation 38 dans un plan perpendiculaire à l'arbre principal 14 et à l'arbre d'entraînement 28.

L'extrémité de la deuxième extension 36 est reliée de manière rotative à une première extrémité d'une biellette 98 elle-même reliée fonctionnellement au levier d'actionnement 112. Lorsque la biellette 98 agit sur l'extrémité de la deuxième extension 36, le levier sélecteur de mode 30 est déplacé en rotation autour de la tige de rotation 38. Comme illustré à la figure 2, le déplacement angulaire du levier sélecteur de mode 30 est défini à l'intérieur d'un secteur angulaire dont les bornes définissent deux positions extrêmes 30-2 et 30-3 et dont la médiane définit une position neutre 30-1.

Le déplacement angulaire du levier sélecteur de mode 30 est provoqué par une translation de la biellette 98 le long de la direction axiale de celle-ci, cette translation étant elle-même provoquée par un déplacement angulaire du levier d'actionnement 112 autour de son arbre de pivotement. Ainsi, sur l'exemple illustré aux figures, et plus particulièrement à la figure 2, la correspondance des déplacements angulaires du levier d'actionnement 112 et du levier sélecteur de mode 30 est la suivante :
- lorsque le levier d'actionnement 112 se trouve dans sa position neutre 112-1, le levier sélecteur de mode 30 se trouve dans sa position neutre 30-1, et c'est le mode de commutation motorisée qui est sélectionné,
- lorsque le levier d'actionnement 112 se trouve dans sa première position extrême 112-2, le levier sélecteur de mode 30 se trouve dans sa première position extrême 30-2, située à droite de la position neutre 30-1 sur la figure 2, et c'est le premier mode de commutation manuelle entre la position d'ouverture et la position de fermeture de l'appareillage électrique qui est sélectionné,
- lorsque le levier d'actionnement 112 se trouve dans sa deuxième position extrême 112-3, le levier sélecteur de mode 30 se trouve dans sa deuxième position extrême 30-3, située à gauche de la position neutre 30-1 sur la figure 2, et c'est le deuxième mode de commutation manuelle entre la position d'ouverture et la position de mise à la terre de l'appareillage électrique qui est sélectionné.

Le levier sélecteur de mode 30, représenté en vue de dessus sur la figure 9, est doté d'une ouverture 40 ménagée dans le corps central 32 sensiblement en forme de disque. Sur l'exemple illustré, cette ouverture 40 est traversante. Elle présente un contour curviligne, ayant deux portions curvilignes 42, 43 ayant sensiblement la forme d'une portion de cercle ou d'une portion d'ellipse ou d'une portion d'ovale ou d'une combinaison de celles-ci. Les deux portions curvilignes sont disposées respectivement en regard de la première extension 34 en forme de triangle et en regard de la deuxième extension 36 en forme de queue. Les deux portions curvilignes 42, 43 sont reliées l'une à l'autre par deux portions intermédiaires 44 qui s'avancent dans l'intérieur de l'ouverture 40 de manière à interrompre la ligne circulaire ou elliptique ou ovale définie par les deux portions curvilignes. Les deux zones de liaison entre les deux portions intermédiaires 44 et la portion curviligne 43 située en regard de la deuxième extension 36 définissent des encoches de liaison 46 du contour de l'ouverture 40.

Lorsque le levier sélecteur de mode 30 est dans la position neutre 30-1, l'ouverture 40 se trouve sensiblement centrée autour de l'arbre d'entraînement 28.

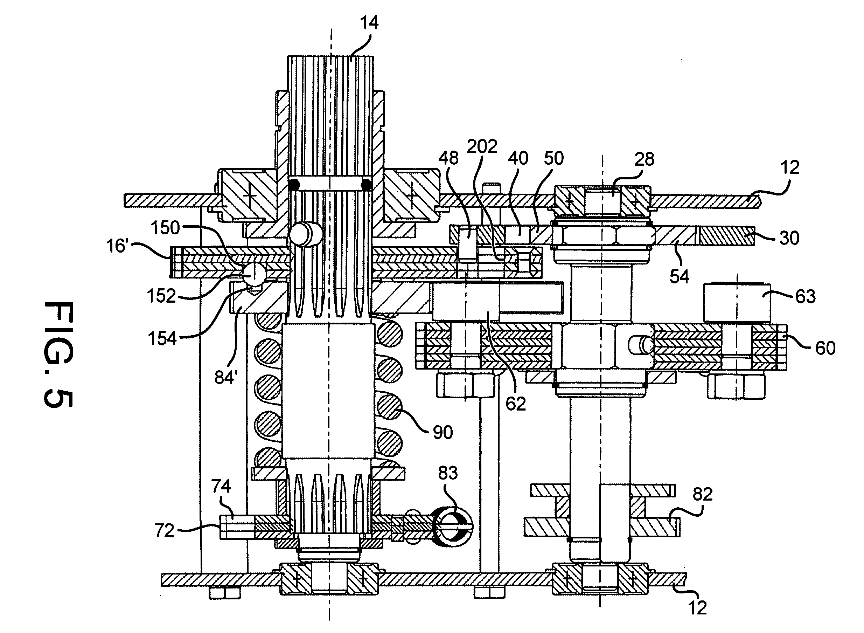

Le levier sélecteur de mode 30 comporte également une broche 48, disposée au niveau de la portion intermédiaire 44 qui est du côté de l'arbre principal 14. Cette broche 48, visible sur la figure 5, s'étend de manière sensiblement perpendiculaire au corps central 32 du levier sélecteur de mode 30, à partir d'une face de celui-ci.

Le dispositif de commande 10 comporte en outre un premier disque à came 50, représenté en vue de dessus à la figure 10, portant une excroissance formant came 54. La came 54 présente un contour sensiblement circulaire ou elliptique ou ovale ayant un centre de courbure confondu avec le centre de courbure du disque 50. Les deux zones de liaison entre le contour du disque 50 et le contour de la came 54 définissent deux becs circonférentiels 56.

Le premier disque à came 50 est fixé rigidement sur l'arbre d'entraînement 28, en regard de la face de la roue 60 sur laquelle se trouvent les deux galets de roue 62, 63. Les deux becs circonférentiels 56 se trouvent disposés symétriquement de part et d'autre du diamètre de la roue 60 sur lequel sont disposés les deux galets de roue 62, 63.

Le premier disque à came 50 se trouve sensiblement au même niveau que le levier sélecteur de mode 30 par rapport à l'arbre d'entraînement 28. La dimension du premier disque à came 50, c'est-à-dire le diamètre du disque augmenté de la largeur de la came 54 est inférieure à la dimension la plus grande de l'ouverture 40. Il s'ensuit que l'ouverture 40 du levier sélecteur de mode 30 entoure le premier disque à came 50.

Le disque de transmission et de verrouillage 16, représenté en vue de dessus à la figure 8, est fixé rigidement sur l'arbre principal 14. Il comporte une première partie de disque 18, dont la périphérie est dentée, qui s'engrène avec une première partie linéaire dentée 24 de la barre de commande 22, formant ainsi un engrenage d'angle. La barre de commande 22 comporte une deuxième partie linéaire dentée 25 qui s'engrène avec les commutateurs auxiliaires 13. L'une des extrémités de la barre de commande 22 dépasse en dehors du boîtier 12. Un indicateur de position 26 est rigidement fixé à cette extrémité de la barre de commande 22, pour être visible à l'extérieur du boîtier 12.

Le disque de transmission et de verrouillage 16 comporte une deuxième partie de disque 20, non dentée, ayant un diamètre supérieur à celui de la première partie de disque 18.

Sur l'exemple illustré aux figures, le disque de transmission et de verrouillage 16 est dimensionné de telle sorte que chacune des deux parties de disque 18, 20 corresponde sensiblement à la moitié du disque. La deuxième partie de disque 20 comporte une fente traversante 202 ayant sensiblement la forme de deux portions d'anneau qui sont décalées radialement l'une par rapport à l'autre, et qui sont reliées par une portion intermédiaire sensiblement rectiligne s'étendant radialement. En fonctionnement, cette fente 202 est destinée à recevoir la broche 48 du levier sélecteur de mode 30.

Le dispositif de commande 10 comporte en outre un disque échancré 72, fixé rigidement sur l'arbre principal 14 et coopérant avec un levier à galets 76. Ce disque échancré 72 est représenté en vue de dessus à la figure 11. Il comporte trois échancrures 74 sensiblement en forme de portion de cercle, qui s'ouvrent sur sa périphérie. Sur l'exemple illustré, les échancrures 74 sur trouvent toutes les trois sur une même moitié du disque échancré 72.

Le levier à galets 76, visible dans sa totalité sur la figure 3, présente sensiblement une forme de tige ayant deux plaques allongées rectilignes et parallèles. L'une des extrémités du levier à galets 76 est reliée à l'arbre intermédiaire 68 de manière à être libre de tourner autour de lui. A l'autre de ses extrémités, le levier à galets 76 est muni d'un premier galet 78, disposé entre les deux plaques et libre de tourner autour d'un axe perpendiculaire aux deux plaques et reliant celles-ci. Entre ses deux extrémités, le levier à galets 76 est muni d'un deuxième galet 80, disposé entre les deux plaques et libre de tourner autour d'un axe perpendiculaire aux deux plaques et reliant celles-ci. Les axes de rotation des deux galets 78, 80 sont perpendiculaires à la direction du levier à galets 76. Le deuxième galet 80 coopère avec un deuxième disque à came 82 porté par l'arbre d'entraînement 28 et avec un ressort de rappel 83 qui agit pour maintenir le deuxième galet 80 en contact avec le deuxième disque à came 82. Le deuxième disque à came 82 présente sensiblement une forme de rectangle aux angles arrondis, de telle sorte que lorsque le deuxième galet 80 se déplace contre le deuxième disque à came 82, le levier à galet 76 est animé d'un débattement angulaire autour de l'arbre intermédiaire 68. La longueur du levier à galets 76, les diamètres et positions des premier et deuxième galets 78, 80 sont tels que le premier galet 78 puisse s'introduire dans l'une des échancrures 74 du disque échancré 72 et s'en retirer au cours du débattement du levier à galets 76.

Sur l'exemple illustré aux figures, le disque entraîné 84 est disposé entre le disque de transmission et de verrouillage 16 et le disque échancré 72 le long de l'arbre principal 14. Le disque entraîné 84, qui se présente sous la forme d'un demi disque, est disposé de manière à se trouver sensiblement en regard de la deuxième partie de disque 20 du disque de transmission et de verrouillage 16. Un ressort de compression 90 pousse le disque entraîné 84 contre le disque de transmission et de verrouillage 16 afin de maintenir un contact entre ces deux disques (figure 3). La présence de ce ressort de compression 90 est facultative pour le premier mode de réalisation, dans la mesure où les deux disques 16, 84 sont fixés rigidement sur l'arbre principal 14.

On va maintenant décrire le fonctionnement du dispositif de commande 10 selon le premier mode de réalisation, en se référant aux figures 2, 2A, 3 et 4.

On convient d'appeler première plage angulaire de rotation du premier disque à came 50 la plage angulaire désignée par 50-1 sur la figure 2A, et deuxième plage angulaire de rotation du premier disque à came la plage angulaire désignée par 50-2 sur la figure 2A.

Comme cela a été indiqué plus haut, lorsque le levier d'actionnement 112 est manuellement positionné dans sa position neutre 112-1, le levier sélecteur de mode se trouve dans sa position neutre 30-1, et c'est le mode de commutation motorisée de l'appareillage électrique qui est sélectionné. Le moteur 2 entraîne l'ensemble d'engrenages 4 qui entraîne la roue 60 du mécanisme de Genève. L'arbre d'entraînement 28 est solidaire de cette roue 60. Par conséquent, le premier disque à came 50, rigidement fixé sur l'arbre d'entraînement 28, est mis en rotation en même temps que la roue 60. Ce premier disque à came est libre de tourner, la came 54 étant libre de tourner à l'intérieur de l'ouverture 40 du levier sélecteur de mode 30 pour la position neutre 30-1 de celui-ci. D'autre part, au cours de la rotation de la roue 60, l'un ou l'autre des galets 62, 63 de cette roue 60 vient en prise avec l'une des échancrures 86 du disque entraîné 84. Par conséquent le disque entraîné 84 est entraîné en rotation, ainsi que l'arbre principal 14 sur lequel il est rigidement fixé.

L'opérateur peut choisir de positionner manuellement le levier d'actionnement 112 dans sa première position extrême 112-2 ou dans sa deuxième position extrême 112-3. Dans ce cas, un organe de manoeuvre, comme par exemple une manivelle, peut être couplé avec un arbre auxiliaire 106 qui entraîne alors l'ensemble d'engrenages 4 d'une manière similaire à l'entraînement de cet ensemble d'engrenages 4 par le moteur 2 lorsque le mode de commutation motorisée est sélectionné.

Lorsque le levier d'actionnement 112 occupe dans sa première position extrême 112-2 ou dans sa deuxième position extrême 112-3, respectivement, le levier sélecteur de mode 30 se trouve alors dans sa première position extrême 30-2 ou dans sa deuxième position extrême 30-3, respectivement, et c'est l'un ou l'autre des deux modes de commutation manuelle de l'appareillage électrique qui est sélectionné. Ces deux situations sont décrites successivement ci-dessous.

Lorsque le levier sélecteur de mode 30 se trouve dans la première position extrême 30-2, le premier mode de commutation manuelle est sélectionné, qui correspond à la commutation entre la position d'ouverture et la position de fermeture de l'appareillage électrique.

L'arbre d'entraînement 28 tourne. Il soulève le levier à galets 76. Il entraîne en rotation le premier disque à came 50 qui tourne de sensiblement 200 degrés dans la première plage angulaire de rotation 50-1 du disque à came 50, ce qui correspond à une rotation de sensiblement 60 degrés de l'arbre principal 14. L'appareillage électrique se trouve alors dans la position d'ouverture ou dans la position de fermeture ou dans une position intermédiaire entre celles-ci. Cette plage angulaire 50-1 est bornée de chaque côté :
- d'une part, la rotation du premier disque à came 50 est interrompue lorsque l'appareillage électrique se trouve dans la position d'ouverture, car un premier des becs 56 de la came 54 vient en butée contre une première des encoches de liaison 46 de l'ouverture 40 du levier sélecteur de mode 30,
- d'autre part, la rotation du premier disque à came 50 est interrompue lorsque l'appareillage électrique se trouve dans la position de fermeture, même si ce premier disque à came 50 pourrait tourner d'environ 20 degrés supplémentaires dans cette direction, car l'un des galets 62, 63 de la roue 60 vient en butée contre l'une des zones de butée 88 du disque entraîné 84 lors du fonctionnement du mécanisme de Genève.

Lorsque le levier sélecteur de mode 30 se trouve dans la deuxième position extrême 30-3, le deuxième mode de commutation manuelle est sélectionné, qui correspond à la commutation entre la position d'ouverture et la position de mise à la terre de l'appareillage électrique.

L'arbre d'entraînement 28 tourne. Il soulève le levier à galets 76. Il entraîne en rotation le premier disque à came 50 qui tourne de sensiblement 200 degrés dans la deuxième plage angulaire de rotation 50-2 du disque à came 50, ce qui correspond à une rotation de sensiblement 60 degrés de l'arbre principal 14. L'appareillage électrique se trouve alors dans la position d'ouverture ou dans la position de mise à la terre ou dans une position intermédiaire entre celles-ci. Cette plage angulaire 50-2 est bornée de chaque côté :
- d'une part, la rotation du premier disque à came 50 est interrompue lorsque l'appareillage électrique se trouve dans la position d'ouverture, car un deuxième des becs 56 de la came 54 vient en butée contre une deuxième des encoches de liaison 46 de l'ouverture 40 du levier sélecteur de mode 30,
- d'autre part, la rotation du premier disque à came 50 est interrompue lorsque l'appareillage électrique se trouve dans la position de mise à la terre, même si ce premier disque à came 50 pourrait tourner d'environ 20 degrés supplémentaires dans cette direction, car un deuxième des galets 62, 63 de la roue 60 vient en butée contre l'autre des zones de butée 88 du disque entraîné 84 lors du fonctionnement du mécanisme de Genève.

Dans l'une ou l'autre des deux situations qui viennent d'être successivement décrites, à savoir le mode de commutation manuelle de la position d'ouverture à la position de fermeture de l'appareillage électrique et le mode de commutation manuelle de la position d'ouverture à la position de mise à la terre de l'appareillage électrique, les caractéristiques suivantes doivent être relevées.

Tout d'abord, lorsque l'un ou l'autre des galets 62, 63 de la roue 60 vient en butée contre l'une ou l'autre des zones de butée 88 du disque entraîné 84, le galet 78 du levier à galets 76 vient se mettre en prise dans l'une des échancrures 74 du disque échancré 72, afin d'empêcher une rotation flottante de l'arbre principal 14, puisque aucun des deux galets 62, 63 de la roue 60 n'est alors en prise dans l'une des échancrures 86 du disque entraîné 84.

Ensuite, la position angulaire des deux encoches de liaison 46 de l'ouverture 40 du levier sélecteur de mode 30 permet de commander le fonctionnement du mécanisme de Genève constitué par la roue 60 et le disque entraîné 84. Cette position angulaire des encoches de liaison 46 est choisie de telle façon que la rotation du disque à came 50 soit interrompue, dans l'une comme dans l'autre des deux plages angulaires 50-1 et 50-2, par la mise en prise de l'un des becs 56 dans l'une des encoches de liaison 46 juste avant que l'un des deux galets 62, 63 de la roue 60 ne vienne en prise dans l'une des échancrures 86 du disque entraîné 84. De cette manière, le mécanisme de Genève est arrêté si l'arbre principal 14 se trouve dans sa position neutre. L'appareillage électrique se trouve alors dans sa position d'ouverture.

Egalement, la forme de ces encoches de liaison 46 est choisie de telle façon que lors de l'interruption de la rotation du premier disque à came 50 par la mise en prise de l'un des becs 56 avec l'une des encoches de liaison 46, la force résultante soit dirigée vers le centre du trou 35 du levier sélecteur de mode 30.

Enfin, le disque de transmission et de verrouillage 16 a pour fonction de limiter la rotation du levier sélecteur de mode 30 afin qu'il ne puisse pas être positionné de façon incorrecte lorsqu'il est déplacé manuellement par un opérateur par l'intermédiaire du levier d'actionnement 112 et de la biellette 98. En d'autres termes, le levier sélecteur de mode 30 ne peut être déplacé vers sa première position extrême 30-2 que si le contact mobile de l'appareillage électrique se trouve dans la position d'ouverture ou dans la position de fermeture ou dans une position intermédiaire entre celles-ci. De manière analogue, le levier sélecteur de mode 30 ne peut être déplacé vers sa deuxième position extrême 30-3 que si le contact mobile de l'appareillage électrique se trouve dans la position d'ouverture ou dans la position de mise à la terre ou dans une position intermédiaire entre celles-ci. Cette limitation du déplacement du levier sélecteur de mode 30 est réalisée au moyen de la broche 48, qui s'étend à partir de la face du levier sélecteur de mode qui est en regard du disque de transmission et de verrouillage 16, et qui se déplace dans la fente 202 de ce disque de transmission et de verrouillage 16 au cours du déplacement du levier sélecteur de mode 30. Lorsque le levier sélecteur de mode 30 se trouve dans sa position neutre 30-1, la broche 48 coulisse dans la portion rectiligne intermédiaire de la fente 202. Lorsque le levier sélecteur de mode 30 se trouve entre sa position neutre 30-1 et sa première position extrême 30-2, la broche 48 coulisse dans l'une des portions d'anneau de la fente 202. Et lorsque le levier sélecteur de mode 30 se trouve entre sa position neutre 30-1 et sa deuxième position extrême 30-3, la broche 48 se trouve dans l'autre des portions d'anneau de la fente 202. Les dimensions de la fente 202 sont choisies pour permettre un tel déplacement de la broche 48.

On va maintenant décrire le deuxième mode de réalisation du dispositif de commande 10' selon l'invention, en référence à la figure 5, qui est une vue en coupe et en élévation du dispositif de commande 10'. Celui-ci comporte notamment, de manière analogue au dispositif de commande 10 selon le premier mode de réalisation, un arbre principal 14, un arbre d'entraînement 28 parallèle à l'arbre principal 14, un levier sélecteur de mode 30 agissant sur un premier disque à came 50 fixé sur l'arbre d'entraînement 28, un mécanisme de Genève constitué d'une roue 60 ayant deux galets 62, 63 et un disque entraîné 84'.

Le dispositif de commande 10' selon le deuxième mode de réalisation diffère du dispositif de commande 10 selon le premier mode de réalisation en ce que le disque entraîné 84' n'est pas fixé rigidement sur l'arbre principal 14, mais possède un degré de liberté en rotation autour de cet arbre principal 14, et un degré de liberté en translation le long de l'arbre principal 14.

Le dispositif de commande 10' selon le deuxième mode de réalisation diffère en outre du dispositif de commande 10 selon le premier mode de réalisation en ce que le disque de transmission et de verrouillage 16' est muni, sur sa face qui se trouve en regard du disque entraîné 84', de trous de verrouillage 150, qui débouchent sur ladite face et qui ont une forme sensiblement cylindrique, dans lesquels sont placées des billes 152. Les trous de verrouillage 150 ont une profondeur telle que les billes 152 dépassent du disque de transmission et de verrouillage 16'.

Le dispositif de commande 10' selon le deuxième mode de réalisation diffère encore du dispositif de commande 10 selon le premier mode de réalisation en ce que le disque entraîné 84' est muni, sur sa face qui se trouve en regard du disque de transmission et de verrouillage 16', de trous entraînés 154, qui débouchent sur ladite face et qui ont une forme sensiblement cylindrique, leur diamètre étant sensiblement inférieur à celui des trous de verrouillage 150.

Les trous de verrouillage 150 du disque de transmission et de verrouillage 16' et les trous entraînés 154 du disque entraîné 84' sont positionnés de telle façon qu'ils puissent se trouvent en regard les uns des autres pour une position angulaire relative donnée du disque de transmission et de verrouillage 16' et du disque entraîné 84'. Un ressort de compression 90 pousse le disque entraîné 84' en contact contre le disque de transmission et de verrouillage 16'. La force de compression du ressort de compression 90 est calibrée pour une valeur de couple donnée.

Selon une réalisation préférée, les trous de verrouillage 150, les billes 152 et les trous entraînés 154 sont au nombre de huit.

Dans ce deuxième mode de réalisation, le couple n'est donc pas transmis de ce disque entraîné 84' au disque de transmission et de verrouillage 16' par l'intermédiaire de l'arbre principal 14, mais il est transmis directement. En effet, le disque entraîné 84' est appliqué contre le disque de transmission et de verrouillage 16' par le ressort de compression 90 formant moyen de rappel. Ainsi, la présence des billes 152 piégées dans des cavités formées par les trous entraînés 150 et les trous de verrouillage 154 permet de solidariser le disque de transmission et de verrouillage 16' et le disque entraîné 84'.

En cas de dysfonctionnement, par exemple si le contact mobile de l'appareillage électrique est bloqué, le couple transmis du disque entraîné 84' au disque de transmission et de verrouillage 16' dépasse la valeur de couple correspondant à la force de compression du ressort de compression 90, qui n'applique alors plus le disque entraîné 84' contre le disque de transmission et de verrouillage 16. Le disque entraîné 84' se déplace axialement le long de l'arbre principal 14 en s'éloignant du disque de transmission et de verrouillage 16', et les billes 152 se dégagent des trous entraînés 154 du disque entraîné 84'. Il se produit alors un découplage entre le disque entraîné 84' et le disque de transmission et de verrouillage 16.

Grâce à cet agencement, les éléments qui commandent ou indiquent la position du sectionneur, c'est-à-dire l'indicateur de position 26, la fente 202 du disque de transmission et de verrouillage 16' et les commutateurs auxiliaires 13 sont en mesure de correspondre à une position de commutation convenable de l'appareillage électrique, même en cas de dysfonctionnement.

De plus, cet agencement permet de satisfaire à la norme n° 129 de la CEI (Commission Internationale d'Electrotechnique), selon laquelle l'élément le plus faible de la chaîne cinématique, depuis le moteur jusqu'au contact mobile, doit être agencé entre le moteur et les éléments indicateurs de position.

Le disque de transmission et de verrouillage 16' qui vient d'être décrit, en référence au deuxième mode de réalisation du dispositif de commande 10', possède, comme celui du premier mode de réalisation, les fonctions d'entraînement de l'indicateur de position 26, par l'intermédiaire de la première partie de disque 18, dentée, et la fonction de limitation de déplacement du levier sélecteur de mode 30, par l'intermédiaire de la fente 202. Il possède de plus la fonction de limiteur de couple, par l'intermédiaire des billes 152. Ce limiteur de couple est agencé à proximité du mécanisme de Genève.

On va maintenant décrire le mécanisme de blocage 100, en référence aux figures 2, 3, 4, 6 et 7. Bien qu'il soit représenté aux figures uniquement avec le premier mode de réalisation du dispositif de commande 10, le mécanisme de blocage 100 est également apte à être mis en oeuvre avec le deuxième mode de réalisation du dispositif de commande 10'.

Le mécanisme de blocage 100 est actionné manuellement. Il est destiné à interdire les modes de commutation manuelle lorsque le mode de commutation motorisée est mis en oeuvre, et à interdire le mode de commutation motorisée lorsque l'un des deux modes de commutation manuelle est mis en oeuvre. La configuration de l'ensemble du dispositif de commande 10, 10' et du mécanisme de blocage 100 est telle que le levier sélecteur de mode 30 se trouve disposé entre l'arbre principal 14 et le mécanisme de blocage 100.

Le mécanisme de blocage 100 comporte une plaque 102 qui est fixée sur une paroi latérale du boîtier 12.

La plaque 102 est percée d'un trou de passage 104. A l'intérieur du boîtier 12, un arbre auxiliaire 106 est disposé de telle manière que l'une de ses extrémités se trouve en regard du trou de passage 104, à une certaine distance de celui-ci. L'arbre auxiliaire 106 a une direction sensiblement perpendiculaire à la direction de l'arbre principal 14. Il est emmanché par son autre extrémité dans un support 108 dans lequel il peut tourner sur lui-même.

La plaque 102 est également percée d'un trou d'axe 110, positionné de telle façon que la droite qui relie le trou de passage 104 et le trou d'axe 110 est sensiblement parallèle à la direction de l'arbre principal 14 sur l'exemple illustré. Successivement, le levier d'actionnement 112, un levier de blocage 114, et deux leviers de commutation 142 sont fixés sur l'arbre de pivotement 116 qui traverse le trou d'arbre 110 de telle façon que la plaque 102 se trouve interposée entre le levier d'actionnement 112 et le levier de blocage 114. Ainsi, le levier d'actionnement 112 et le levier de blocage 114 peuvent pivoter ensemble autour de l'arbre de pivotement 116, parallèlement à la plaque 102 et de chaque côté de celle-ci.

Le levier de blocage 114 est relié à la deuxième extrémité de la biellette 98, l'autre extrémité de la biellette 98 étant reliée au levier sélecteur de mode 30, comme cela a été décrit précédemment. Ainsi, le pivotement du levier de blocage 114 provoque une translation de la biellette 98, suivant la direction axiale de celle-ci, qui est sensiblement perpendiculaire à la fois à la droite reliant le trou de passage 104 et le trou d'axe 110 et à la direction de l'arbre principal 14. Ainsi, le levier d'actionnement 112 est relié fonctionnellement au levier sélecteur de mode 30 de manière à commander le déplacement de celui-ci. Le levier d'actionnement 112 est déplacé manuellement. Lorsque le levier d'actionnement 112 est déplacé de sa position neutre 112-1 à sa première position extrême 112-2, le levier sélecteur de mode 30 est déplacé de sa position neutre 30-1 à sa première position extrême 30-2. De manière analogue, lorsque le levier d'actionnement 112 est déplacé de sa position neutre 112-1 à sa deuxième position extrême 112-3, le levier sélecteur de mode 30 est déplacé de sa position neutre 30-1 à sa deuxième position extrême 30-3.

Le levier d'actionnement 112 présente sensiblement une forme de plaquette ayant une direction allongée. Son extrémité libre est percée d'un trou de levier 118 dont le diamètre est sensiblement égal au diamètre du trou de passage 104. Il comporte en outre deux pattes d'extension 120 qui s'étendent au niveau de son extrémité libre, en étant sensiblement perpendiculaires au plan de la plaquette allongée, d'un même côté de celle-ci. Lorsque le levier d'actionnement 112 est installé en ayant une face en regard de la plaque 102, les deux pattes d'extension 120 se trouvent sur la face opposée à cette face en regard de la plaque 102.

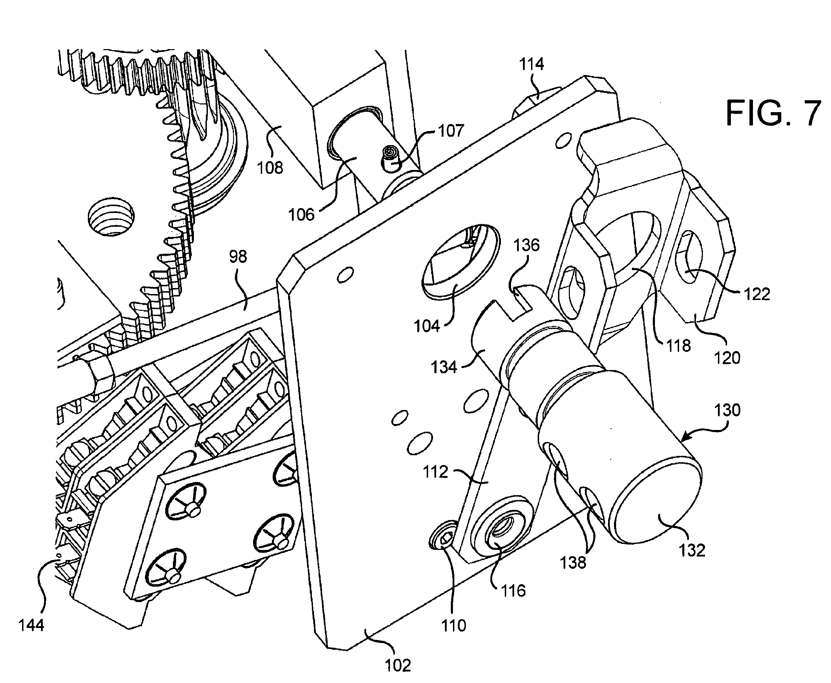

Les deux pattes d'extension 120 sont percées chacune d'un trou de blocage 122, ces deux trous de blocage 122 étant disposés l'un en face de l'autre suivant une direction perpendiculaire à la direction de la plaquette allongée (figure 7).

Le mécanisme de blocage 100 comporte en outre un boulon d'arrêt 130 ayant une tête de boulon 132 et une tige de boulon 134. Sur l'exemple illustré, la tête de boulon 132 et la tige de boulon 134 présentent sensiblement des formes cylindriques à sections circulaires, centrées sur un même axe. Le diamètre de la tête de boulon 132 est suffisamment petit pour que la tête de boulon 132 puisse être placée entre les deux pattes d'extension 120 du levier d'actionnement 112. Le diamètre de la tête de boulon 132 est suffisamment grand pour que la tête de boulon 132 ne puisse pas traverser le trou de passage 104.

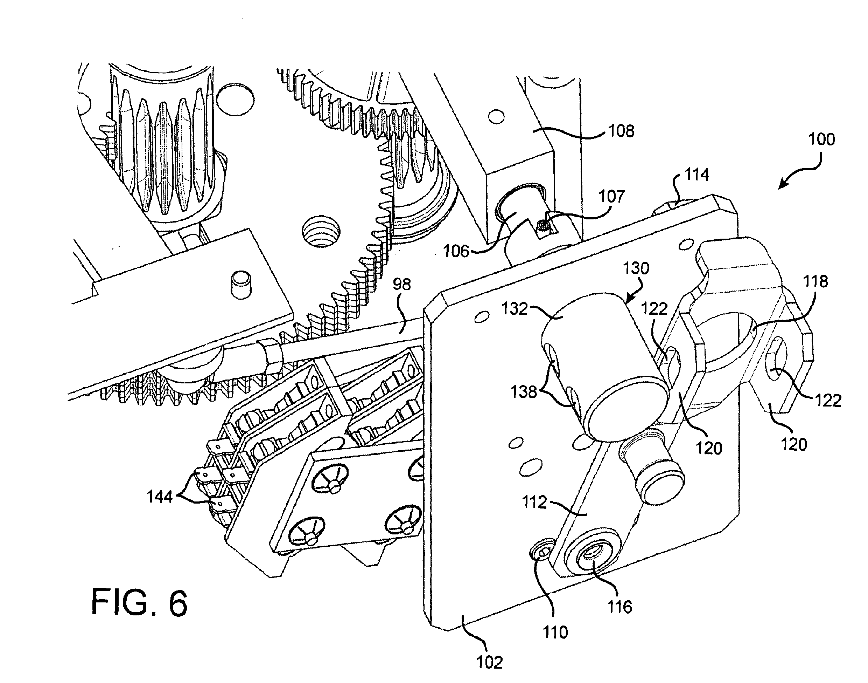

La tige de boulon 134 est creuse, et elle est apte à venir s'emboîter sur l'extrémité libre de l'arbre auxiliaire 106, en traversant le trou de passage 104 et la distance séparant l'extrémité libre de l'arbre auxiliaire 106 de la plaque 102, pour certaines positions du levier d'actionnement 112, comme il sera expliqué par la suite. L'extrémité de la tige de boulon 134 comporte deux encoches 136, disposées en étant diamétralement opposées l'une à l'autre, destinées à coopérer avec deux ergots 107 disposés sur l'extrémité libre de l'arbre auxiliaire 106 en étant diamétralement opposés l'un à l'autre. Par conséquent, lorsque la tige de boulon 134 est emboîtée sur l'extrémité libre de l'arbre auxiliaire 106, les encoches 136 et les ergots 107 forment des moyens de blocage qui solidarisent le boulon d'arrêt 130 et l'arbre auxiliaire 106 (figures 6 et 7). Par conséquent, lorsque le boulon d'arrêt 130 est immobilisé, par exemple au moyen d'un cadenas 140, l'arbre auxiliaire 106 est empêché de tourner.

La tête de boulon 132 comporte un ou plusieurs trous de boulon d'arrêt 138, deux sur l'exemple illustré. Ces trous de boulon d'arrêt 138 sont parallèles entre eux et traversent diamétralement la tête de boulon 132, c'est-à-dire perpendiculairement à la direction de la tige de boulon 134 (figure 7).

Le(s) trou(s) de boulon d'arrêt 138 et les trous de blocage 122 sont destinés à recevoir les bras d'un cadenas 140, ou moyen de verrouillage analogue, pour verrouiller ensemble le boulon d'arrêt 130 et le levier d'actionnement 112, dans l'une parmi les trois positions possibles 112-1, 112-2, 112-3 du levier d'actionnement 112 (figure 2).

En outre, l'extrémité libre de chaque levier de commutation 142 est reliée à des commutateurs supplémentaires, par exemple de type micro commutateurs, 144 (voir figure 3), qui sont eux-mêmes reliés au moteur et lui fournissent des informations sur celui des modes qui est sélectionné, afin d'interrompre l'alimentation provenant du moteur si l'un des deux modes de commutation manuelle est sélectionné.

On va maintenant décrire le fonctionnement du mécanisme de blocage 100, en liaison avec le dispositif de commande, et en référence aux figures 2, 3, 4 et 6.

Sur les figures 2 et 3 est représenté l'ensemble du mécanisme de commande 10 et du mécanisme de blocage 100, dans une configuration qui correspond au mode de commutation motorisée. Le levier d'actionnement 112 se trouve dans sa position neutre 112-1. Il est positionné de telle façon que le trou de levier 118 se trouve en regard du trou de passage 104. La tige de boulon 134 est positionnée de telle sorte que successivement elle traverse le trou de levier 118 entre les deux pattes d'extension 120 et pénètre dans le trou de passage 104. Dans sa position, le levier de blocage 114 obture le trou de passage 104, de telle sorte que la tige de boulon 134 vienne buter contre le levier de blocage 114 sans pouvoir traverser le trou de passage 104. Par conséquent, la tige de boulon 134 ne s'emboîte pas sur l'extrémité libre de l'arbre auxiliaire 106. L'arbre auxiliaire 106 est donc libre de tourner, entraîné par le moteur 2. Le cadenas 140 est installé (figure 3) de façon à immobiliser le mécanisme de blocage 100 dans cette position, chaque bras du cadenas 140 se trouvant positionné dans l'un des trous de boulon d'arrêt 138. La présence du boulon d'arrêt 130, lorsqu'il est positionné de cette façon, empêche le levier d'actionnement 112 de pivoter vers l'une ou l'autre de ses deux positions extrêmes 112-2, 112-3. Le levier de blocage 114 se trouve positionné de la même façon que le levier d'actionnement 112, de l'autre côté de la plaque 102. Dans cette configuration la biellette 98 est positionnée de telle façon que le levier sélecteur de mode 30 relié à la première extrémité de la biellette 98 se trouve dans sa position neutre 30-1, et c'est le mode de commutation motorisée de l'appareillage électrique qui est sélectionné.

Sur la figure 4 sont représentés le mécanisme de commande 10 et le mécanisme de blocage 100, dans une configuration qui correspond au deuxième mode de commutation manuelle entre la position d'ouverture et la position de mise à la terre de l'appareillage électrique. Le levier d'actionnement 112 se trouve dans sa deuxième position extrême 112-3. Il est positionné de telle façon que le trou de levier 118 ne se trouve pas en regard du trou de passage 104, mais sur sa gauche sur la figure 4. La tige de boulon 134 est positionnée de telle sorte qu'elle traverse uniquement le trou de passage 104, sans avoir à traverser l'épaisseur du levier d'actionnement 112. La tête de boulon 132 se trouve directement placée contre la plaque 102. Par conséquent, la tige de boulon 134 est suffisamment longue pour pouvoir s'emboîter sur l'extrémité libre de l'arbre auxiliaire 106, les encoches 136 étant en prise avec les ergots 107. Le cadenas 140 est installé de façon à immobiliser le mécanisme de blocage 100 dans cette configuration, et à immobiliser l'arbre auxiliaire 106 et le moteur 2 pour empêcher une opération involontaire du dispositif de commande 10. L'un des bras du cadenas 140 traverse le trou de boulon d'arrêt 138 le plus éloigné de la plaque 102, et l'une des pattes d'extension 120, et l'autre bras du cadenas 140 ne traverse aucune pièce. Le levier de blocage 114 se trouve positionné de la même façon que le levier d'actionnement 112, de l'autre côté de la plaque 102. Dans cette configuration, la biellette 98 est positionnée de telle façon que le levier sélecteur de mode 30 relié à la première extrémité de la biellette 98 se trouve dans sa deuxième position extrême 30-3, et c'est le deuxième mode de commutation manuelle entre la position d'ouverture et la position de mise à la terre de l'appareillage électrique qui est sélectionné.

Pour mettre en oeuvre manuellement le dispositif de commande 10, le cadenas 140 et le boulon d'arrêt 130 sont retirés, et un organe de manoeuvre, non représenté, peut être couplé à l'arbre auxiliaire 106. Cet organe de manoeuvre, par exemple une manivelle, est introduit dans le trou de passage 104 et est couplé à l'arbre auxiliaire 106, qui entraîne alors l'ensemble d'engrenages 4.

Sur la figure 6 est représenté le mécanisme de blocage 100, dans une configuration qui correspond au premier mode de commutation manuelle entre la position d'ouverture et la position de fermeture de l'appareillage électrique. Le levier d'actionnement 112 se trouve dans sa première position extrême 112-2. Il est positionné de telle façon que le trou de levier 118 ne se trouve pas en regard du trou de passage 104, mais sur sa droite sur la figure 6. La tige de boulon 134 est positionnée de telle sorte qu'elle traverse uniquement le trou de passage 104, sans avoir à traverser l'épaisseur du levier d'actionnement 112. La tête de boulon 132 se trouve directement placée contre la plaque 102. Par conséquent, la tige de boulon 134 est suffisamment longue pour pouvoir s'emboîter sur l'extrémité libre de l'arbre auxiliaire 106, les encoches 136 étant en prise avec les ergots 107. Le cadenas 140 n'est pas représenté, mais il pourrait être installé d'une manière analogue à celle de la figure 4, de façon à immobiliser le mécanisme de blocage 100 dans cette configuration, et à immobiliser l'arbre auxiliaire 106 et le moteur 2 pour empêcher une opération involontaire du dispositif de commande 10. Le levier de blocage 114 se trouve positionné de la même façon que le levier d'actionnement 112, de l'autre côté de la plaque 102. Dans cette configuration la biellette 98 est positionnée de telle façon que le levier sélecteur de mode 30 relié à la première extrémité de la biellette 98 se trouve dans sa première position extrême 30-2, et c'est le premier mode de commutation manuelle entre la position d'ouverture et la position de fermeture de l'appareillage électrique qui est sélectionné.

Bien entendu, l'invention n'est pas limitée au mode de réalisation qui vient d'être décrit. Des variantes de réalisation remplissant les mêmes fonctions sont envisageables.

Par exemple, l'ouverture 40 est une ouverture traversante, mais elle pourrait être remplacée par un évidement de la face inférieure du levier sélecteur de mode 30.

Par exemple, les leviers de commutation 142 sont au nombre de deux, mais il pourrait y en avoir un seul, ou il pourrait y en avoir trois ou davantage.

Par ailleurs, le mécanisme de blocage 100 et l'arbre auxiliaire 106 pourraient être disposés avec une orientation différente, par exemple l'arbre auxiliaire 106 pourrait être parallèle à l'arbre principal 14 et à l'arbre d'entraînement 28.

## Revendications

1. Dispositif de commande (10, 10') pour un appareillage électrique à trois positions de commutation, du type comportant une position de fermeture, une position d'ouverture et une position de mise à la terre, et comprenant un arbre principal (14) et un arbre d'entraînement (28), dispositif destiné à être accouplé à un contact mobile dudit appareillage électrique,
**caractérisé en ce qu**'il comporte :
- un levier sélecteur de mode (30) destiné à sélectionner un mode de fonctionnement parmi les modes « mode de commutation motorisée », « premier mode de commutation manuelle entre la position d'ouverture et la position de fermeture de l'appareillage électrique » et « deuxième mode de commutation manuelle entre la position d'ouverture et la position de mise à la terre de l'appareillage électrique », ledit levier sélecteur de mode (30) comportant une ouverture (40), et
- un disque à came (50), fixé sur l'arbre d'entraînement (28), et ayant une came (54) apte à se déplacer à l'intérieur de ladite ouverture (40),
de telle manière que le déplacement du disque à came (50) est libre lorsque le dispositif de commande (10) se trouve dans le mode de commutation motorisée, limité à une première plage angulaire de rotation (50-1) de l'arbre d'entraînement (28) lorsque le dispositif de commande (10) se trouve dans le premier mode de commutation manuelle, et limité à une deuxième plage angulaire de rotation (50-2) de l'arbre d'entraînement (28) lorsque le dispositif de commande (10) se trouve dans le deuxième mode de commutation manuelle.

2. Dispositif de commande (10, 10') selon la revendication 1, **caractérisé en ce que** le levier sélecteur de mode (30) se déplace entre :
- une position neutre (30-1), par laquelle est sélectionné le mode de commutation motorisé, qui peut être atteinte pour n'importe quelle position angulaire de l'arbre principal (14),
- une première position extrême (30-2), par laquelle est sélectionné le premier mode de commutation manuelle entre la position d'ouverture et la position de fermeture de l'appareillage électrique, et qui peut être atteinte lorsque la position angulaire de l'arbre principal (14) se trouve dans une première plage angulaire,
- une deuxième position extrême (30-3), par laquelle est sélectionné le deuxième mode de commutation manuelle entre la position d'ouverture et la position de mise à la terre de l'appareillage électrique, et qui peut être atteinte lorsque la position angulaire de l'arbre principal (14) se trouve dans une deuxième plage angulaire.

3. Dispositif de commande (10, 10') selon la revendication 1 ou 2, **caractérisé en ce que** la came (54) présente un contour sensiblement circulaire ou elliptique ou ovale ayant un centre de courbure confondu avec le centre de courbure du disque à came (50), et **en ce qu'**elle est reliée au disque à came (50) par deux zones de liaison qui définissent deux becs circonférentiels (56).

4. Dispositif de commande (10, 10') selon l'une quelconque des revendications 1 à 3, **caractérisé en ce que** le contour de l'ouverture (40) du levier sélecteur de mode (30) comporte deux portions curvilignes (42, 43) reliées l'une à l'autre par deux portions intermédiaires (44), les portions curvilignes (42, 43) et les portions intermédiaires (44) étant séparées par des zones de liaison qui définissent deux encoches de liaison (46).

5. Dispositif de commande (10, 10') selon l'une quelconque des revendications 1 à 4, **caractérisé en ce qu**'il comporte un disque de transmission et de verrouillage (16, 16'), fixé sur l'arbre principal (14), ledit disque de transmission et de verrouillage (16, 16') comportant une première partie de disque (18) qui est fonctionnellement reliée à des équipements d'indication de position, et une deuxième partie de disque (20) qui coopère avec le levier sélecteur de mode (30) pour empêcher celui-ci de se trouver dans une position incorrecte lors de son déplacement, en fonction de la position angulaire de l'arbre principal (14).

6. Dispositif de commande (10, 10') selon la revendication 5, **caractérisé en ce que** la première partie de disque (18) est munie de dents sur sa périphérie, lesdites dents étant destinées à se mettre en prise avec des dents d'une barre de commande (22) qui est fonctionnellement reliée à des commutateurs auxiliaires (13) et à un indicateur de position (26).

7. Dispositif de commande (10, 10') selon la revendication 5 ou 6, **caractérisé en ce que** la deuxième partie de disque (20) comporte une fente (202) ayant sensiblement la forme de deux portions d'anneau décalées radialement l'une de l'autre et en communication l'une avec l'autre.

8. Dispositif de commande (10, 10') selon la revendication 7, **caractérisé en ce qu**'il comporte une broche (48) fixée au levier sélecteur de mode (30), et en ce que ladite broche (48) s'engrène dans ladite fente (202) pour empêcher le levier sélecteur de mode (30) de se trouver dans une position incorrecte lors de son déplacement, en fonction de la position angulaire de l'arbre principal (14).

9. Dispositif de commande (10, 10') selon la revendication 8, **caractérisé** la broche (48) s'étend de manière sensiblement perpendiculaire à partir d'une face du levier sélecteur de mode (30) qui se trouve en regard du disque de transmission et de verrouillage (16, 16') .

10. Dispositif de commande (10, 10') selon l'une quelconque des revendications 5 à 9, **caractérisé en ce que** le disque de transmission et de verrouillage (16, 16') est entraîné par un disque entraîné (84, 84') porté par l'arbre principal (14), ledit disque entraîné (84, 84') étant lui-même entraîné par une roue à galets (60) fixée sur l'arbre d'entraînement (28), dans lesquels le disque entraîné (84, 84') présente deux échancrures (86) et deux zones de butée (88) de telle sorte que ledit disque entraîné (84, 84') et ladite roue à galets (60) constituent un mécanisme de Genève.

11. Dispositif de commande (10) selon la revendication 10, **caractérisé en ce que** ledit mécanisme de Genève limite la rotation de l'arbre principal (14) dans une plage angulaire de 120 degrés.

12. Dispositif de commande (10) selon la revendication 10 ou 11, **caractérisé en ce que** le disque entraîné (84) est fixé rigidement sur l'arbre principal (14) et entraîne l'arbre principal (14) et le disque de transmission et de verrouillage (16) fixé sur ledit arbre principal (14).

13. Dispositif de commande (10') selon la revendication 10 ou 11, **caractérisé en ce que** le disque entraîné (84') possède un degré de liberté en rotation autour dudit arbre principal (14) et un degré de liberté en translation le long dudit arbre principal (14), **en ce que** le disque entraîné (84') entraîne le disque de transmission et de verrouillage (16'), le disque entraîné (84') étant appliqué élastiquement contre le disque de transmission et de verrouillage (16') par l'intermédiaire d'un moyen de rappel (90), et chacun desdits disque entraîné (84') et disque de transmission et de verrouillage (16') comporte des trous respectifs (154, 150) qui coïncident de manière à former des cavités dans lesquelles sont disposées des billes (152), la combinaison du disque de transmission et de verrouillage (16'), du disque entraîné (84'), du moyen de rappel (90), des billes (152) et des trous (150, 154) constituant un mécanisme limiteur de couple.

14. Dispositif de commande (10, 10') selon l'une quelconque des revendications 10 à 13 combinées avec les revendications 3 et 4, **caractérisé en ce que** la rotation du premier disque à came (50) est interrompue :
- soit lorsque le levier sélecteur de mode (30) se trouve dans la première position extrême (30-2) et l'appareillage électrique se trouve dans la position d'ouverture, car un premier des becs (56) de la came (54) du disque à came (50) vient en butée contre une première encoche de liaison (46) de l'ouverture (40) du levier sélecteur de mode (30),
- soit lorsque le levier sélecteur de mode (30) se trouve dans la première position extrême (30-2) et l'appareillage électrique se trouve dans la position de fermeture, car un premier des galets (62, 63) de la roue (60) vient en butée contre l'une des zones de butée (88) du disque entraîné (84, 84') lors du fonctionnement du mécanisme de Genève,
- soit lorsque le levier sélecteur de mode (30) se trouve dans la deuxième position extrême (30-3) et l'appareillage électrique se trouve dans la position d'ouverture, car un deuxième des becs (56) de la came (54) du disque à came (50) vient en butée contre une deuxième encoche de liaison (46) de l'ouverture (40) du levier sélecteur de mode (30),
- soit lorsque le levier sélecteur de mode (30) se trouve dans la deuxième position extrême (30-3) l'appareillage électrique se trouve dans la position de mise à la terre, car un deuxième des galets (62, 63) de la roue (60) vient en butée contre l'autre des zones de butée (88) du disque entraîné (84, 84') lors du fonctionnement du mécanisme de Genève.

15. Dispositif de commande (10, 10') selon l'une quelconque des revendications 1 à 14, **caractérisé en ce qu**'il comporte un levier d'actionnement (112) qui est fonctionnellement relié au levier sélecteur de mode (30), de telle sorte qu'il est possible de sélectionner le mode de commutation motorisée ou l'un des deux modes de commutation manuelle en positionnant le levier d'actionnement (112) dans l'une des trois positions suivantes :
- une position neutre (112-1) correspondant à la position neutre (30-1) du levier sélecteur de mode (30), par laquelle est sélectionné le mode de commutation motorisée,
- une première position extrême (112-2) correspondant à la première position extrême (30-2) du levier sélecteur de mode (30), et par laquelle est sélectionné le premier mode de commutation manuelle entre la position d'ouverture et la position de fermeture de l'appareillage électrique,
- une deuxième position extrême (112-3) correspondant à la première position extrême (30-3) du levier sélecteur de mode (30), et par laquelle est sélectionné le deuxième mode de commutation manuelle entre la position d'ouverture et la position de mise à la terre de l'appareillage électrique.

16. Dispositif de commande (10, 10') selon la revendication 15, **caractérisé en ce qu**'un déplacement du levier d'actionnement (112) produit un déplacement d'une biellette (98) qui reliée au levier sélecteur de mode (30) et qui commande le déplacement de celui-ci.

17. Dispositif de commande (10, 10') selon la revendication 15 ou 16, **caractérisé en ce que** le levier d'actionnement (112) est apte à pivoter autour d'un arbre de pivotement (116), dans un plan perpendiculaire à un arbre auxiliaire (106).

18. Dispositif de commande (10, 10') selon l'une quelconque des revendications 15 à 17, **caractérisé en ce qu**'il est fonctionnellement relié à un mécanisme de blocage (100) qui comporte un levier de blocage (114) rigidement fixé au levier d'actionnement (112) et un boulon d'arrêt (130), le dispositif de commande (10) et le mécanisme de blocage (100) étant disposés dans un boîtier (12), de telle manière que le levier d'actionnement (112) et le boulon d'arrêt (130) sont disposés du côté extérieur d'une paroi dudit boîtier (12), tandis que le levier de blocage (114) est disposé du côté intérieur de ladite paroi dudit boîtier (12).

19. Dispositif de commande (10, 10') selon la revendication 18, **caractérisé en ce que** :
- le boîtier (12) est doté d'un trou de passage (104),
- le boulon d'arrêt (130) est doté d'une tige de boulon (134),
et **en ce que** lorsque le mode de commutation motorisée est sélectionné, le levier de blocage (114) est positionné en regard du trou de passage (104), afin d'empêcher la tige de boulon (134) ou un organe de manoeuvre de se coupler à l'arbre auxiliaire (106).

20. Dispositif de commande (10, 10') selon la revendication 18, **caractérisé en ce que** :
- le boîtier (12) est doté d'un trou de passage (104),
- le boulon d'arrêt (130) est doté d'une tige de boulon (134),
et **en ce que** lorsque l'un des modes de commutation manuelle est sélectionné, le levier de blocage (114) est positionné de manière à dégager le trou de passage (104), afin de permettre à la tige de boulon (134) ou à un organe de se coupler à l'arbre auxiliaire (106).

21. Dispositif de commande (10, 10') selon l'une quelconque des revendications 15 à 20, **caractérisé en ce que** le boulon d'arrêt (130) et le levier d'actionnement (112) sont immobilisés ensemble dans une position correspondant au mode de commutation motorisée ou dans une position correspondant à l'un ou à l'autre des deux modes de commutation manuelle, au moyen d'un cadenas (140) ayant des bras qui traversent au moins un trou de blocage (122) du levier d'actionnement (112) et au moins un trou (138) du boulon d'arrêt (130).

22. Dispositif de commande (10, 10') selon l'une quelconque des revendications 15 à 21, **caractérisé en ce qu**'il comporte au moins un levier de commutation (142) associé au mécanisme de blocage (100), ledit au moins un levier de commutation (142) étant relié à des commutateurs supplémentaires (144) eux-mêmes reliés au moteur, afin d'informer ledit moteur du mode de commutation sélectionné.

## Claims

1. A control device (10, 10') for an electrical switchgear with three switching positions, namely a closed position, an open position and an earthing position, and comprising a main shaft (14) and a drive shaft (28), device intended to be coupled to a mobile contact of said electrical switchgear,
**characterised in that** it comprises:
- a mode selector lever (30) selecting one operating mode among the « motor driven switching mode », the « first manual switching mode between the open position and the closed position of the electrical switchgear » and the « second manual switching mode between the open position and the earthing position of the electrical switchgear », said mode selector lever (30) comprising an opening (40), and
- a cam disk (50), fixed on the drive shaft (28), with a cam (54) capable of moving inside said opening (40),
such that the displacement of the cam disk (50) is free when the control device (10) is in the motor driven switching mode, limited to a first angular rotation range (50-1) of the drive shaft (28) when the control device (10) is in the first manual switching mode, and limited to a second angular rotation range (50-2) of the drive shaft (28) when the control device (10) is in the second manual switching mode.

2. The control device (10, 10') according to claim 1, **characterised in that** the mode selector lever (30) moves between:
- a neutral position (30-1), in which the motor driven switching mode is selected, that may be reached for any angular position of the main shaft (14),
- a first extreme position (30-2), in which the first manual switching mode between the open position and the closed position of the electrical switchgear is selected, and that can be reached when the angular position of the main shaft (14) is in a first angular range,
- a second extreme position (30-3), in which the second manual switching mode between the open position and the earthing position of the electrical switchgear is selected, and that can be reached when the angular position of the main shaft (14) is in a second angular range.

3. The control device (10, 10') according to claim 1 or 2, **characterised in that** the cam (54) has a substantially circular or elliptical or oval contour and has a centre of curvature that is coincident with the centre of curvature of the cam disk (50), and **in that** it is connected to the cam disk (50) by two connecting areas that define two circumferential noses (56).

4. The control device (10, 10') according to any one of claims 1 to 3, **characterised in that** the opening (40) of the mode selector lever (30) has a contour that comprises two curved portions (42, 43) connected to each other by two intermediate portions (44), the curved portions (42, 43) and the intermediate portions (44) being separated by connecting areas that define two connecting notches (46).

5. The control device (10, 10') according to any one of claims 1 to 4, **characterised in that** it comprises a transmission and interlocking disk (16, 16'), fixed on the main shaft (14), said transmission and interlocking disk (16, 16') comprising a first part of the disk (18) that is functionally connected to position indicating equipment, and a second part of the disk (20) that cooperates with the mode selector lever (30) to prevent it from being in a wrong position during displacement, as a function of the angular position of the main shaft (14).

6. The control device (10, 10') according to claim 5, **characterised in that** the first part of the disk (18) is fitted with teeth around its periphery, said teeth being designed to engage with teeth in a control bar (22) that is functionally connected to auxiliary switches (13) and to a position indicator (26) .

7. The control device (10, 10') according to claim 5 or 6, **characterised in that** the second part of the disk (20) comprises a slit (202) substantially in the shape of two ring portions radially offset from each other and in communication with each other.

8. The control device (10, 10') according to claim 7, **characterised in that** it comprises a spindle (48) fixed to the mode selector lever (30), and **in that** said spindle (48) engages in said slit (202) to prevent the mode selector lever (30) from being in a wrong position during its displacement as a function of the angular position of the main shaft (14).

9. The control device (10, 10') according to claim 8, **characterised in that** the spindle (48) extends substantially perpendicular from a face of the mode selector lever (30) that is facing the transmission and interlocking disk (16, 16').

10. The control device (10, 10') according to any one of claims 5 to 9, **characterised in that** the transmission and interlocking disk (16, 16') is driven by a driven disk (84, 84°) supported on the main shaft (14), said driven disk (84, 84') itself being driven by a roller wheel (60) fixed on the drive shaft (28), in which the driven disk (84, 84') is provided with two recesses (86) and two stop areas (88) such that said driven disk (84, 84') and said roller wheel (60) form a Geneva drive mechanism.

11. The control device (10) according to claim 10, **characterised in that** said Geneva drive mechanism limits rotation of the main shaft (14) within an angular range of 120 degrees.

12. The control device (10) according to claim 10 or 11, **characterised in that** the driven disk (84) is rigidly fixed to the main shaft (14) and drives the main shaft (14) and the transmission and interlocking disk (16) fixed on said main shaft (14).

13. The control device (10') according to claim 10 or 11, **characterised in that** the driven disk (84') has a degree of freedom in rotation about said main shaft (14) and a degree of freedom in translation along said main shaft (14), **in that** the driven disk (84') drives the transmission and interlocking disk (16'), the driven disk (84') being applied elastically in contact with the transmission and interlocking disk (16') through a return means (90), and each of said driven disk (84') and transmission and interlocking disk (16') comprises corresponding holes (154, 150) that coincide so as to form cavities inside which balls (152) are arranged, the combination of the transmission and interlocking disk (16'), the driven disk (84'), the return means (90), balls (152) and holes (150, 154) forming a torque limiting mechanism.

14. The control device (10, 10') according to any one of claims 10 to 13 combined with claims 3 and 4, **characterised in that** rotation of the first cam disk (50) is interrupted:
- either when the mode selector lever (30) is in the first extreme position (30-2) and the electrical switchgear is in the open position, since a first of the noses (56) of the cam (54) on the cam disk (50) stops in contact with a first connecting notch (46) of the opening (40) in the mode selector lever (30),
- or when the mode selector lever (30) is in the first extreme position (30-2) and the electrical switchgear is in the closed position, since a first of the rollers (62, 63) of the wheel (60) stops in contact with one of the stop areas (88) of the driven disk (84, 84') during operation of the Geneva drive mechanism,
- or when the mode selector lever (30) is in the second extreme position (30-3) and the electrical switchgear is in the open position, since a second of the noses (56) of the cam (54) on the cam disk (50) stops in contact with a second connecting notch (46) of the opening (40) of the mode selector lever (30),
- or when the mode selector lever (30) is in the second extreme position (30-3) and the electrical switchgear is in the earthing position, since a second of the rollers (62, 63) of the wheel (60) stops in contact with the other of the stop areas (88) of the driven disk (84, 84') during operation of the Geneva drive mechanism.

15. The control device (10, 10') according to any one of claims 1 to 14, **characterised in that** it comprises an actuation lever (112) that is functionally connected to the mode selector lever (30), such that the motor driven switching mode or one of the two manual switching modes can be selected by positioning the actuation lever (112) in one of the following three positions:
- a neutral position (112-1) corresponding to the neutral position (30-1) of the mode selector lever (30), through which the motor driven switching mode is selected,
- a first extreme position (112-2) corresponding to the first extreme position (30-2) of the mode selector lever (30), and through which the first manual switching mode between the open position and the closed position of the electrical switchgear is selected,
- a second extreme position (112-3) corresponding to the first extreme position (30-3) of the mode selector lever (30), and through which the second manual switching mode between the open position and the earthing position of the electrical switchgear is selected.

16. The control device (10, 10') according to claim 15, **characterised in that** displacement of the actuation lever (112) causes displacement of a connecting rod (98) that is connected to the mode selector lever (30) and that controls displacement of the mode selector lever (30).

17. The control device (10, 10') according to claim 15 or 16, **characterised in that** the actuation lever (112) can pivot about a pivot shaft (116), in a plane perpendicular to an auxiliary shaft (106).

18. The control device (10, 10') according to any one of claims 15 to 17, **characterised in that** it is functionally connected to a locking mechanism (100) that comprises a locking lever (114) rigidly fixed to the actuation lever (112) and a stop bolt (130), the control device (10) and the locking mechanism (100) being arranged in a housing (12), such that the actuation lever (112) and the stop bolt (130) are arranged on the outside of a wall of said housing (12), while the locking lever (114) is arranged on the inside of said wall of said housing (12).

19. The control device (10, 10') according to claim 18, **characterised in that**:
- the housing (12) is provided with a passage hole (104),
- the stop bolt (130) is provided with a bolt stem (134),
and **in that** when the motor driven switching mode is selected, the locking lever (114) is positioned facing the passage hole (104), so as to prevent the bolt stem (134) or a manoeuvre member from coupling with the auxiliary shaft (106).

20. The control device (10, 10') according to claim 18, **characterised in that**:
- the housing (12) is provided with a passage hole (104),
- the stop bolt (130) is provided with a bolt stem (134),
and **in that** when one of the manual switching modes is selected, the locking lever (114) is positioned so as to release the passage hole (104), so that a bolt stem (134) or a member can be coupled with the auxiliary shaft (106).

21. The control device (10, 10') according to any one of claims 15 to 20, **characterised in that** the stop bolt (130) and the actuation lever (112) are locked together in a position corresponding to the motor driven switching mode or in a position corresponding to either of the two manual switching modes, by means of a padlock (140) with arms that pass through at least one locking hole (122) in the actuation lever (112) and at least one hole (138) in the stop bolt (130).

22. The control device (10, 10') according to any one of claims 15 to 21, **characterised in that** it comprises at least one switching lever (142) associated with the locking mechanism (100), said at least one switching lever (142) being connected to additional switches (144) themselves connected to the motor, to inform said motor about which switching mode is selected.

## Patentansprüche

1. Steuervorrichtung (10, 10') für eine elektrische Einrichtung mit drei Schaltstellungen vom Typ mit einer Schließstellung, einer Öffnungsstellung und einer Erdungsstellung und mit einer Hauptwelle (14) und einer Antriebswelle (28), welche Vorrichtung dazu bestimmt ist, mit einem beweglichen Kontakt der elektrischen Einrichtung gekoppelt zu werden,
**dadurch gekennzeichnet, dass** sie enthält:
- einen Moduswählhebel (30), der dazu bestimmt ist, einen Betriebsmodus unter den Modi "Motorschaltmodus", "erster manueller Schaltmodus zwischen Öffnungsstellung und Schließstellung der elektrischen Einrichtung" und "zweiter manueller Schaltmodus zwischen Öffnungsstellung und Erdungsstellung der elektrischen Einrichtung" zu wählen, wobei der Moduswählhebel (30) eine Öffnung (40) enthält, und
- eine Kurvenscheibe (50), die an der Antriebswelle (28) befestigt ist und eine Steuerkurve (54) aufweist, die innerhalb der Öffnung (40) verstellbar ist,
so dass die Verstellung der Kurvenscheibe (50) frei ist, wenn die Steuervorrichtung (10) sich im Motorschaltmodus befindet, auf einen ersten Drehwinkelbereich (50-1) der Antriebswelle (28) begrenzt ist, wenn die Steuervorrichtung (10) sich in dem ersten manuellen Schaltmodus befindet, und auf einen zweiten Drehwinkelbereich (50-2) der Antriebswelle (28) begrenzt ist, wenn die Steuervorrichtung (10) sich in dem zweiten manuellen Schaltmodus befindet.

2. Steuervorrichtung (10, 10') nach Anspruch 1, **dadurch gekennzeichnet, dass** der Moduswählhebel (30) verstellbar ist zwischen:
- einer Neutralstellung (30-1), mit welcher der Motorschaltmodus gewählt ist und die bei einer beliebigen Winkelstellung der Hauptwelle (14) erreicht werden kann,
- einer ersten Endstellung (30-2), mit welcher der erste manuelle Schaltmodus zwischen der Öffnungsstellung und der Schließstellung der elektrischen Einrichtung gewählt ist und die erreicht werden kann, wenn die Winkelstellung der Hauptwelle (14) in einem ersten Winkelbereich liegt,
- einer zweiten Endstellung (30-3), mit welcher der zweite manuelle Schaltmodus zwischen der Öffnungsstellung und der Erdungsstellung der elektrischen Einrichtung gewählt ist und die erreicht werden kann, wenn die Winkelstellung der Hauptwelle (14) in einem zweiten Winkelbereich liegt.

3. Steuervorrichtung (10, 10') nach Anspruch 1 oder 2, **dadurch gekennzeichnet, dass** die Steuerkurve (54) eine im wesentlichen kreisrunde oder elliptische oder ovale Kontur mit einem Krümmungsmittelpunkt aufweist, der mit dem Krümmungsmittelpunkt der Kurvenscheibe (50) zusammenfällt, und dass sie mit der Kurvenscheibe (50) über zwei Verbindungsbereiche verbunden ist, welche zwei Umfangsnasen (56) definieren.

4. Steuervorrichtung (10, 10') nach einem der Ansprüche 1 bis 3, **dadurch gekennzeichnet, dass** die Kontur der Öffnung (40) des Moduswählhebels (30) zwei gekrümmte Abschnitte (42, 43) aufweist, die über zwei Zwischenabschnitte (44) miteinander verbunden sind, wobei die gekrümmten Abschnitte (42, 43) und die Zwischenabschnitte (44) durch Verbindungsbereiche getrennt sind, welche zwei Verbindungseinherbungen (46) definieren.

5. Steuervorrichtung (10, 10') nach einem der Ansprüche 1 bis 4, **dadurch gekennzeichnet, dass** sie eine Übertragungs- und Verriegelungsscheibe (16, 16') aufweist, die an der Hauptwelle (14) befestigt ist, wobei die Übertragungs- und Verriegelungsscheibe (16, 16') einen ersten Scheibenabschnitt (18) aufweist, der funktionell mit Stellungsanzeigemitteln verbunden ist, sowie einen zweiten Scheibenabschnitt (20), der in Abhängigkeit von der Winkelstellung der Hauptwelle (14) mit dem Moduswählhebel (30) zusammenwirkt, um diesen daran zu hindern, sich bei seiner Verstellung in einer nicht ordnungsgemäßen Stellung zu befinden.

6. Steuervorrichtung (10, 10') nach Anspruch 5, **dadurch gekennzeichnet, dass** der erste Scheibenabschnitt (18) an seinem Umfang mit Zähnen versehen ist, wobei die Zähne dazu bestimmt sind, mit Zähnen einer Steuerstange (22) in Eingriff zu gelangen, die funktionell mit Hilfsschaltern (13) und mit einem Stellungsanzeiger (26) verbunden ist.

7. Steuervorrichtung (10, 10') nach Anspruch 5 oder 6, **dadurch gekennzeichnet, dass** der zweite Scheibenabschnitt (20) einen Schlitz (202) aufweist, der im wesentlichen die Form von zwei radial zueinander versetzt liegenden und miteinander in Verbindung stehenden Ringabschnitten hat.

8. Steuervorrichtung (10, 10') nach Anspruch 7, **dadurch gekennzeichnet, dass** sie einen Stift (48) enthält, der am Moduswählhebel (30) befestigt ist, und dass der Stift (48) in Abhängigkeit von der Winkelstellung der Hauptwelle (14) in den Schlitz (202) eingreift, um den Moduswählhebel (30) daran zu hindern, sich bei seiner Verstellung in einer nicht ordnungsgemäßen Stellung zu befinden.

9. Steuervorrichtung (10, 10') nach Anspruch 8, **dadurch gekennzeichnet, dass** der Stift (48) sich von einer Seite des Moduswählhebels (30), die der Übertragungs- und Verriegelungsscheibe (16, 16') gegenüberliegt, im wesentlichen senkrecht erstreckt.

10. Steuervorrichtung (10, 10') nach einem der Ansprüche 5 bis 9, **dadurch gekennzeichnet, dass** die Übertragungs- und Verriegelungsscheibe (16, 16') von einer von der Hauptwelle (14) getragenen Mitnehmerscheibe (84, 84') mitgenommen wird, wobei die Mitnehmerscheibe (84, 84') ihrerseits von einem Rollenrad (60) mitgenommen wird, das an der Antriebswelle (28) befestigt ist, in welchen die Mitnehmerscheibe (84, 84') zwei Aussparungen (86) und zwei Anschlagbereiche (88) aufweist, so dass die Mitnehmerscheibe (84, 84') und das Rollenrad (60) ein Malteserkreuzgetriebe bilden.

11. Steuervorrichtung (10, 10') nach Anspruch 10, **dadurch gekennzeichnet, dass** das Malteserlcreuzgetriebe die Drehung der Hauptwelle (14) auf einen Winkelbereich von 120° begrenzt.

12. Steuervorrichtung (10, 10') Anspruch 10 oder 11, **dadurch gekennzeichnet, dass** die Mitnehmerscheibe (84) starr an der Hauptwelle (14) befestigt ist und die Hauptwelle (14) und die an der Hauptwelle (14) befestigte Übertragungs- und Verriegelungsscheibe (16) antreibt.

13. Steuervorrichtung (10, 10') nach Anspruch 10 oder 11, **dadurch gekennzeichnet, dass** die Mitnehmerscheibe (84') einen Drehfreiheitsgrad um die Hauptwelle (14) und einen Verschiebefreiheitsgrad entlang der Hauptwelle (14) besitzt, dass die Mitnehmerscheibe (84') die Übertragungs- und Verriegelungsscheibe (16') mitnimmt, wobei die Mitnehmerscheibe (84') über ein Rückstellmittel (90) elastisch an die Übertragungs- und Verriegelungsscheibe (16') angedrückt wird, und wobei die Mitnehmerscheibe (84') und die Übertragungs- und Verriegelungsscheibe (16') jeweils Löcher (154, 150) aufweisen, die so übereinstimmen, dass sie Hohlräume bilden, in welche Kugeln (152) einliegen, wobei die Kombination der Übertragungs- und Verriegelungsscheibe (16°), der Mitnehmerscheibe (84'), des Rückstellmittels (90), der Kugeln (152) und Löcher (150, 154) einen Drehmomentbegrenzungsmechanismus bilden.

14. Steuervorrichtung (10, 10') nach einem der Ansprüche 10 bis 13 in Kombination mit den Ansprüchen 3 und 4, **dadurch gekennzeichnet, dass** die Drehung der ersten Kurvenscheibe (50) dann unterbrochen wird, wenn entweder:
- der Moduswählhebel (30) in der ersten Endstellung (30-2) und die elektrische Einrichtung in der Öffnungsstellung liegt, weil eine erste der Nasen (56) der Steuerkurve (54) der Kurvenscheibe (50) in Anschlag an eine erste Verbindungseinkerbung (46) der Öffnung (40) des Moduswählhebels (30) gelangt,
- oder der Moduswählhebel (30) in der ersten Endstellung (30-2) und die elektrische Einrichtung in der Schließstellung liegt, weil eine erste der Rollen (62, 63) des Rads (60) in Anschlag an einen der Anschlagbereiche (88) der Mitnehmerscheibe (84, 84') bei Betrieb des Malteserkreuzgetriebes gelangt,
- oder aber der Moduswählhebel (30) in der zweiten Endstellung (30-3) und die elektrische Einrichtung in der Öffnungsstellung liegt, weil eine zweite der Nasen (56) der Steuerkurve (54) der Kurvenscheibe (50) in Anschlag an eine zweite Verbindungseinkerbung (46) der Öffnung (40) des Moduswählhebels (30) gelangt,
- oder aber der Moduswählhebel (30) in der zweiten Endstellung (30-3) und die elektrische Einrichtung in der Erdungsstellung liegt, weil eine zweite der Rollen (62, 63) des Rads (60) in Anschlag an den anderen der Anschlagbereiche (88) der Mitnehmerscheibe (84, 84') bei Betrieb des Malteserkreuzgetriebes gelangt.

15. Steuervorrichtung (10, 10') nach einem der Ansprüche 1 bis 14, **dadurch gekennzeichnet, dass** sie einen Betätigungshebel (112) enthält, der funktionell mit dem Moduswählhebel (30) verbunden ist, so dass es möglich ist, den Motorschaltmodus oder einen der beiden manuellen Schaltmodi zu wählen, indem der Betätigungshebel (112) in eine der drei nachfolgenden Stellungen verstellt wird:
- eine Neutralstellung (112-1), die der Neutralstellung (30-1) des Moduswählhebels (30) entspricht und mit welcher der Motorschaltmodus gewählt ist,
- eine erste Endstellung (112-2), die der ersten Endstellung (30-2) des Moduswählhebels (30) entspricht und mit welcher der erste manuelle Schaltmodus zwischen der Öffnungsstellung und der Schließstellung der elektrischen Einrichtung gewählt ist,
- eine zweite Endstellung (112-3), die der ersten Endstellung (30-3) des Moduswählhebels (30) entspricht und mit welcher der zweite manuelle Schaltmodus zwischen der Öffnungsstellung und der Erdungsstellung der elektrischen Einrichtung gewählt ist.

16. Steuervorrichtung (10, 10') nach Anspruch 15, **dadurch gekennzeichnet, dass** eine Verstellung des Betätigungshebels (112) eine Verstellung eines Schwenkarms (98) bewirkt, der mit dem Moduswählhebel (30) verbunden ist und die Verstellung desselben steuert.

17. Steuervorrichtung (10, 10') nach Anspruch 15 oder 16, **dadurch gekennzeichnet, dass** der Betätigungshebel (112) um eine Schwenkachse (116) in einer Ebene senkrecht zu einer Hilfswelle (106) verschwenkbar ist.

18. Steuervorrichtung (10, 10') nach einem der Ansprüche 15 bis 17, **dadurch gekennzeichnet, dass** sie funktionell mit einem Sicherungsmechanismus (100) verbunden ist, der einen starr mit dem Betätigungshebel (112) verbundenen Sicherungshebel (114) und einen Arretierbolzen (130) enthält, wobei die Steuervorrichtung (10) und der Sicherungsmechanismus (100) in einem Gehäuse (12) angeordnet sind, so dass der Betätigungshebel (112) und der Arretierbolzen (130) auf der Außenseite einer Wand des Gehäuses (12) angeordnet sind, während der Sicherungshebel (114) an der Innenseite der Wand des Gehäuses (12) angeordnet ist.

19. Steuervorrichtung (10, 10') nach Anspruch 18, **dadurch gekennzeichnet, dass**:
- das Gehäuse (12) mit einem Durchgangsloch (104) versehen ist,
- der Arretierbolzen (130) mit einem Bolzenschaft (134) versehen ist,
und dass dann, wenn der Motorschaltmodus gewählt ist, der Sicherungshebel (114) dem Durchgangsloch (104) gegenüberliegend positioniert ist, um den Bolzenschaft (134) bzw. ein Bedienglied daran zu hindern, sich an die Hilfswelle (106) anzukoppeln.

20. Steuervorrichtung (10, 10') nach Anspruch 18, **dadurch gekennzeichnet, dass**:
- das Gehäuse (12) mit einem Durchgangsloch (104) versehen ist,
- der Arretierbolzen (130) mit einem Bolzenschaft (134) versehen ist,
und dass dann, wenn einer der manuellen Schaltmodi gewählt ist, der Sicherungshebel (114) so positioniert ist, dass er das Durchgangsloch (104) freigibt, um dem Bolzenschaft (134) bzw. einem Glied zu gestatten, sich an die Hilfswelle (106) anzukoppeln.

21. Steuervorrichtung (10, 10') nach einem der Ansprüche 15 bis 20, **dadurch gekennzeichnet, dass** der Arretierbolzen (130) und der Betätigungshebel (112) zusammen in einer Stellung festgelegt sind, die dem Motorschaltmodus entspricht, oder in einer Stellung, die dem einen oder anderen der manuellen Schaltmodi entspricht, und zwar mittels eines Vorhängeschlosses (140), das mit seinen Schenkeln zumindest ein Sicherungsloch (122) des Betätigungshebels (112) und zumindest ein Loch (138) des Arretierbolzens (130) durchsetzt.

22. Steuervorrichtung (10, 10') nach einem der Ansprüche 15 bis 21, **dadurch gekennzeichnet, dass** sie zumindest einen Schalthebel (142) enthält, der dem Sicherungsmechanismus (100) zugeordnet ist, wobei der zumindest eine Schalthebel (142) mit Zusatzschaltem (144) verbunden ist, die ihrerseits mit dem Motor verbunden sind, um den Motor über den ausgewählten Schaltmodus zu informieren.
